# EUROPEAN PATENT APPLICATION

(11) **EP 4 746 468 A1**
(43) Date of publication of application: **20.05.2026**
(21) Application number: 24850846.7
(22) Date of filing: 29.07.2024
(51) Int. Cl.: H04W 8/24

(54) **COMMUNICATION METHODS AND APPARATUSES**

(30) Priority: 10.08.2023 CN 202311010193
(71) Applicant: Huawei Technologies Co., Ltd., Shenzhen, Guangdong 518129 (CN)
(72) Inventor: XU, Gaoyang, Shenzhen, Guangdong 518129 (CN); XIE, Xi, Shenzhen, Guangdong 518129 (CN); CHANG, Junren, Shenzhen, Guangdong 518129 (CN); DING, Li, Shenzhen, Guangdong 518129 (CN)
(74) Representative: MERH-IP Matias Erny Reichl Hoffmann Patentanwälte PartG mbB
(86) International application number: PCT/CN2024/108242
(87) International publication number: WO 2025/031198

(57) **Abstract**

A communication method and apparatus are provided. The method includes: A terminal device sends first information to a network device, where the first information indicates a preference value of a first parameter. The terminal device sends second information if it is determined to cancel the preference value of the first parameter and the terminal device is allowed to cancel a preference during running of a first timer, where the first timer is used to prohibit the terminal device from reporting preference information, and the second information is used to cancel the preference value of the first parameter. Based on the solution, if the terminal device is allowed to cancel the preference during the running of the first timer and the terminal device determines to cancel the preference value of the first parameter, the terminal device can send, in a timely manner, the second information used to cancel a preference value of a parameter. In this way, the network device can configure, in a timely manner based on the second information, a parameter that matches a current service requirement, thereby improving user experience.

## Description

This application claims priority to Chinese Patent Application No. 202311010193.4, filed with the China National Intellectual Property Administration on August 10, 2023 and entitled "COMMUNICATION METHOD AND APPARATUS", which is incorporated herein by reference in its entirety.

### TECHNICAL FIELD

Embodiments of this application relate to the communication field, and in particular, to a communication method and apparatus.

### BACKGROUND

Currently, user equipment (user equipment, UE) may report capability information to a network device. The capability information may indicate a type of user equipment assistance information (UE assistance information, UAI) that the UE supports for reporting. The network device may configure, for the UE based on the capability information reported by the UE, a specific type of UAI that needs to be reported. The UE reports the UAI based on a configuration from the network device, where the UAI may indicate a preference value of a parameter that is recommended by the UE.

In addition, the network device may further configure a prohibit timer for the UE. The prohibit timer is used to restrict the UE from frequently reporting the UAI. If the network device has configured a prohibit timer, the UE may start a prohibit timer of a corresponding type after reporting the UAI. During running of the prohibit timer, the UE is not allowed to report UAI of a same type again.

### SUMMARY

Embodiments of this application provide a communication method and apparatus, so that a terminal device can send, in a timely manner, information used to cancel a preference.

According to a first aspect, a communication method is provided. The method may be performed by a terminal device, or may be performed by a component of the terminal device, for example, a processor, a chip, or a chip system of the terminal device, or may be implemented by a logical module or software that can implement all or some functions of the terminal device. The method includes: sending first information, where the first information indicates a preference value of a first parameter; and sending second information if it is determined to cancel the preference value of the first parameter and the terminal device is allowed to cancel a preference during running of a first timer, where the first timer is used to prohibit the terminal device from reporting preference information, and the second information is used to cancel the preference value of the first parameter.

Based on the solution, after the terminal device reports the preference value of the first parameter, if the terminal device is allowed to cancel the preference during the running of the first timer and the terminal device determines to cancel the preference value of the first parameter, the terminal device can send, to a network device in a timely manner, the second information used to cancel the preference value of the first parameter. In this way, the network device can configure, in a timely manner based on the second information, a parameter value that matches a current service requirement, thereby improving user experience.

In a possible design, the method further includes: receiving third information, where the third information indicates that the terminal device is allowed to cancel the preference during the running of the first timer.

In a possible design, the second information is sent during the running of the first timer.

Based on the possible design, if the terminal device is allowed to cancel the preference during the running of the first timer, the terminal device may not be restricted by a first prohibit timer. If the terminal device determines to cancel the preference value of the first parameter during running of the first prohibit timer, the terminal device does not need to wait for the first timer to expire, but sends the second information in a timely manner during the running of the first prohibit timer. In this way, the network device can configure, in a timely manner based on the second information, a parameter value that matches a current service requirement, thereby improving user experience.

According to a second aspect, a communication method is provided. The method may be performed by a terminal device, or may be performed by a component of the terminal device, for example, a processor, a chip, or a chip system of the terminal device, or may be implemented by a logical module or software that can implement all or some functions of the terminal device. The method includes: sending first information, where the first information indicates a preference value of a first parameter; receiving third information, where the third information indicates that the terminal device is allowed to cancel a preference during running of a first timer; and sending second information during the running of the first timer, where the first timer is used to prohibit the terminal device from reporting preference information, and the second information is used to cancel the preference value of the first parameter.

Based on the solution, because the third information indicates that the terminal device is allowed to cancel the preference during the running of the first timer, the terminal device may send, during the running of the first timer, the second information used to cancel a preference value of a parameter, in other words, the terminal device may send the second information in a timely manner without waiting for the first timer to expire. In this way, a network device can configure, in a timely manner based on the second information, a parameter value that matches a current service requirement, thereby improving user experience.

With reference to the first aspect or the second aspect, in a possible design, the method further includes: sending fourth information. The fourth information meets at least one of the following: The fourth information is used to request the third information; the fourth information is used to request permission for the terminal device to cancel the preference during the running of the first timer; the fourth information indicates that the terminal device has a requirement for canceling the preference; the fourth information is used to request that cancellation of the preference is not restricted by the first timer; the fourth information is used to request permission for the terminal device to cancel the preference without being restricted by the first timer; the fourth information is used to notify the network device that the terminal device may cancel the preference; the fourth information indicates that the terminal device supports canceling the preference; or the fourth information indicates that the terminal device supports canceling the preference without being restricted by the first timer.

With reference to the first aspect or the second aspect, in a possible design, the method further includes: starting or restarting the first timer.

Based on the possible design, when the terminal device sends the second information, the terminal device indicates, to the network device by using the second information, that the preference value of the first parameter is to be canceled, and the network device no longer performs configuration based on the preference value previously reported by the terminal device. If the first timer is not restarted, after original expiration time of the first timer, the terminal device may send information to the network device again to change the preference value of the first parameter, that is, the terminal device requests the network device to perform reconfiguration again. In other words, the terminal device may frequently request the network device to perform reconfiguration, which increases processing complexity of the network device. If the first timer is restarted when the terminal device sends the second information, time during which the terminal device is prohibited from reporting the preference value may be restarted. This prevents the terminal device from frequently changing the preference value, thereby reducing the processing complexity of the network device.

With reference to the first aspect or the second aspect, in a possible design, the method further includes: if the terminal device is not allowed to cancel the preference during the running of the first timer, sending the second information when the first timer is not running.

According to a third aspect, a communication method is provided. The method may be performed by a terminal device, or may be performed by a component of the terminal device, for example, a processor, a chip, or a chip system of the terminal device, or may be implemented by a logical module or software that can implement all or some functions of the terminal device. The method includes: sending first information, where the first information indicates a preference value of a first parameter; starting a first timer, where the first timer is used to prohibit the terminal device from reporting preference information; starting or restarting a second timer, where the second timer is used to prohibit the terminal device from canceling a preference; and sending second information if it is determined to cancel the preference value of the first parameter and the second timer is not running, where the second information is used to cancel the preference value of the first parameter.

Based on the solution, in addition to the first timer, the terminal device further starts or restarts the second timer, and sends, to a network device, information used to cancel the preference, if it is determined to cancel a reported preference value of a parameter and the second timer is not running. That is, the terminal device may not be restricted by the first timer when canceling the preference, and only needs to determine whether the second timer is running. Duration of the second timer may be flexibly adjusted, so that the terminal device can send, in a timely manner, the information used to cancel the preference, and the network device can update a configuration in a timely manner, to make a parameter configuration match a current service requirement, thereby improving user experience. In addition, the second information is sent when the second timer is not running, in other words, the terminal device is not allowed to cancel the preference during running of the second timer. Therefore, the terminal device can be restricted from immediately canceling the preference after reporting the preference, that is, the terminal device is restricted from frequently requesting the network device to perform configuration, thereby reducing implementation complexity of the network device.

In a possible design, the method further includes: sending fourth information. The fourth information is used to request permission for the terminal device to cancel the preference during running of the first timer; or the fourth information is used to request permission to send the second information when the second timer is not running.

In a possible design, the method further includes: receiving fifth information. The fifth information indicates the duration of the second timer; or the fifth information indicates that the second timer is allowed to be used; or the fifth information indicates that the second timer is available; or the fifth information is used to enable the second timer.

In a possible design, the fifth information and configuration information of the first timer are carried in a same RRC message. Alternatively, the fifth information is carried in an RRC message used to reconfigure the first parameter.

In a possible design, starting or restarting the second timer includes: starting or restarting the second timer after a first radio resource control RRC message is received, where the first RRC message is used to reconfigure the first parameter. Alternatively, the second timer is started or restarted if it is determined to send the second information.

Based on the possible design, because the first RRC message is used to reconfigure the first parameter, when the terminal device receives the first RRC message, it indicates that the network device has just changed a parameter configuration. In this case, the second timer is started or restarted, to prohibit the terminal device from canceling the preference during the running of the second timer. This can prevent the terminal device from immediately canceling the preference after the network device changes the parameter configuration, thereby reducing the implementation complexity of the network device. Alternatively, the second timer is started or restarted when the terminal device determines to send the second information. This can prevent the terminal device from frequently sending the second information when frequently determining to send the second information, thereby avoiding frequent changes of the parameter configuration by the network device, and reducing the implementation complexity of the network device.

In a possible design, the duration of the second timer is less than duration of the first timer.

Based on the possible design, when there is only the first timer but not the second timer, cancellation of the preference by the terminal device also needs to be restricted by the first timer. That is, the terminal device can send the information used to cancel the preference, only after the first timer expires. When the second timer is introduced, the cancellation of the preference by the terminal device may be restricted by the second timer. Because the duration of the second timer is less than the duration of the first timer, duration during which the terminal device is prohibited from canceling the preference is reduced, so that the terminal device can report, in a timely manner, the information used to cancel the preference, thereby helping the terminal device cancel the preference in a timely manner.

In a possible design, start time of the first timer is the same as start time of the second timer.

Based on the possible design, when the start time of the first timer is the same as the start time of the second timer, if the duration of the second timer is less than the duration of the first timer, the second timer may expire before the first timer expires. That is, time during which the terminal device is prohibited from canceling the preference is shortened, thereby helping cancel the preference in a timely manner.

In a possible design, the duration of the second timer is a fixed value, or the duration of the second timer is one of a plurality of candidate duration values.

Based on the possible design, when the duration of the second timer is a fixed value, overheads for indicating the duration of the second timer can be reduced. When the duration of the second timer is one of a plurality of candidate duration values, configuration flexibility of the second timer can be improved.

According to a fourth aspect, a communication method is provided. The method may be performed by a terminal device, or may be performed by a component of the terminal device, for example, a processor, a chip, or a chip system of the terminal device, or may be implemented by a logical module or software that can implement all or some functions of the terminal device. The method includes: sending first information, where the first information indicates a preference value of a first parameter; determining to cancel the preference value of the first parameter; and sending second information, where a time interval between a sending moment of the second information and a sending moment of the first information is greater than or equal to first duration, and the second information is used to cancel the preference value of the first parameter.

Based on the solution, after reporting a preference value of a parameter, the terminal device may send, after the first duration, the second information used to cancel the preference value, without being restricted by a prohibit timer. In this way, a network device can configure, in a timely manner based on the second information, a parameter value that matches a current service requirement, thereby improving user experience. In addition, an interval between sending time of the second information and sending time of the first information is at least the first duration. Therefore, the terminal device can be prevented from frequently requesting the network device to perform configuration, thereby reducing implementation complexity of the network device.

In a possible design, the method further includes: receiving sixth information, where the sixth information indicates the first duration.

Based on the possible design, the first duration is configured through signaling. For example, the first duration may vary with different service requirements or communication quality, providing high flexibility.

According to a fifth aspect, a communication method is provided. The method may be performed by a network device, or may be performed by a component of the network device, for example, a processor, a chip, or a chip system of the network device, or may be implemented by a logical module or software that can implement all or some functions of the network device. The method includes: sending third information, where the third information indicates whether a terminal device is allowed to cancel a preference during running of a first timer. The first timer is used to prohibit the terminal device from reporting preference information.

Based on the solution, if the network device allows the terminal device to cancel the preference during the running of the first timer, the terminal device can send, during the running of the first timer, information used to cancel a preference value of a parameter, in other words, the terminal device can send the information in a timely manner without waiting for the first timer to expire. In this way, the network device can configure, in a timely manner, a parameter that matches a current service requirement, thereby improving user experience.

In a possible design, the method further includes: receiving first information, where the first information indicates a preference value of a first parameter; and receiving second information, where the second information is used to cancel the preference value of the first parameter. The second information is used to cancel the preference value of the first parameter.

In a possible design, receiving the second information includes: receiving the second information during the running of the first timer.

According to a sixth aspect, a communication method is provided. The method may be performed by a network device, or may be performed by a component of the network device, for example, a processor, a chip, or a chip system of the network device, or may be implemented by a logical module or software that can implement all or some functions of the network device. The method includes: receiving first information, where the first information indicates a preference value of a first parameter; and receiving second information during running of a first timer, where the first timer is used to prohibit a terminal device from reporting preference information, and the second information is used to cancel the preference value of the first parameter.

Based on the solution, the network device receives the second information during the running of the first timer, indicating that the terminal device can send, during the running of the first timer, the second information used to cancel a preference value of a parameter, in other words, the terminal device can send the second information in a timely manner without waiting for the first timer to expire. In this way, the network device can perform configuration in a timely manner, so that a parameter configuration matches a current service requirement, thereby improving user experience.

In a possible design, the method further includes: sending third information, where the third information indicates whether the terminal device is allowed to cancel a preference during the running of the first timer.

With reference to the fifth aspect or the sixth aspect, in a possible design, the method further includes: receiving fourth information. The fourth information meets at least one of the following: The fourth information is used to request the third information; the fourth information is used to request permission for the terminal device to cancel the preference during the running of the first timer; the fourth information indicates that the terminal device has a requirement for canceling the preference; the fourth information is used to request that cancellation of the preference is not restricted by the first timer; the fourth information is used to request permission for the terminal device to cancel the preference without being restricted by the first timer; the fourth information is used to notify the network device that the terminal device may cancel the preference; the fourth information indicates that the terminal device supports canceling the preference; or the fourth information indicates that the terminal device supports canceling the preference without being restricted by the first timer.

With reference to the fifth aspect or the sixth aspect, in a possible design, sending the third information includes: sending the third information in response to the fourth information.

According to a seventh aspect, a communication method is provided. The method may be performed by a network device, or may be performed by a component of the network device, for example, a processor, a chip, or a chip system of the network device, or may be implemented by a logical module or software that can implement all or some functions of the network device. The method includes: sending configuration information of a first timer, where the first timer is used to prohibit the terminal device from reporting preference information; and sending fifth information, where the fifth information indicates duration of a second timer, or the fifth information indicates that the second timer is allowed to be used, or the fifth information indicates that the second timer is available, or the fifth information is used to enable the second timer.

Based on the solution, in addition to the first timer, the network device further configures the second timer for the terminal device, so that the terminal device can start or restart the second timer, and send, to the network device based on the second timer, information used to cancel a preference. That is, the terminal device may not be restricted by the first timer when canceling the preference, and only needs to determine whether the second timer is running. The duration of the second timer may be flexibly adjusted, so that the terminal device can send, in a timely manner, the information used to cancel the preference, and the network device can update a configuration in a timely manner, to make a parameter configuration match a current service requirement, thereby improving user experience. In addition, second information is sent when the second timer is not running, in other words, the terminal device is not allowed to cancel the preference during running of the second timer. Therefore, the terminal device can be restricted from immediately canceling the preference after reporting the preference, that is, the terminal device is restricted from frequently requesting the network device to perform configuration, thereby reducing implementation complexity of the network device.

In a possible design, the method further includes: receiving first information, where the first information indicates a preference value of a first parameter; and receiving second information, where the second information is used to cancel the preference value of the first parameter. The second information is used to cancel the preference value of the first parameter.

In a possible design, receiving the second information includes: receiving the second information when the second timer is not running.

In a possible design, the fifth information is carried in a third RRC message, and the third RRC message further includes the configuration information of the first timer. Alternatively, the fifth information is carried in a first RRC message, and the first RRC message is used to configure the first parameter.

In a possible design, the duration of the second timer is less than duration of the first timer.

In a possible design, the duration of the second timer is a fixed value, or the duration of the second timer is one of a plurality of candidate duration values.

According to an eighth aspect, a communication method is provided. The method includes: A terminal device sends first information to a network device; and correspondingly, the network device receives the first information from the terminal device, where the first information indicates a preference value of a first parameter. The terminal device sends second information to the network device if the terminal device determines to cancel the preference value of the first parameter and the terminal device is allowed to cancel a preference during running of a first timer, and correspondingly, the network device receives the second information from the terminal device. The first timer is used to prohibit the terminal device from reporting preference information. The second information is used to cancel the preference value of the first parameter.

According to a ninth aspect, a communication method is provided. The method includes: A terminal device sends first information to a network device; and correspondingly, the network device receives the first information from the terminal device, where the first information indicates a preference value of a first parameter. The network device sends third information to the terminal device; and correspondingly, the terminal device receives the third information from the network device, where the third information indicates that the terminal device is allowed to cancel a preference during running of a first timer. The terminal device sends second information during the running of the first timer; and correspondingly, the network device receives the second information from the terminal device. The first timer is used to prohibit the terminal device from reporting preference information. The second information is used to cancel the preference value of the first parameter.

With reference to any one of the first aspect to the ninth aspect, in a possible design, the first information or the second information is carried in a user equipment assistance information UAI message.

With reference to any one of the first aspect to the ninth aspect, in a possible design, the first parameter includes at least one of the following: a discontinuous reception DRX parameter, a maximum aggregated bandwidth, a maximum quantity of carriers, or a maximum quantity of multiple-input multiple-output layers.

With reference to any one of the first aspect to the ninth aspect, in a possible design, that the terminal device sends the information includes: The terminal device sends the information to the network device. That the terminal device receives the information includes: The terminal device receives the information from the network device.

With reference to any one of the first aspect to the ninth aspect, in a possible design, that the network device sends the information includes: The network device sends the information to the terminal device. That the network device receives the information includes: The network device receives the information from the terminal device.

According to a tenth aspect, a communication apparatus is provided. The communication apparatus includes a unit or a module, and the unit or the module is configured to perform any method according to the first aspect to the sixth aspect.

According to an eleventh aspect, a communication apparatus is provided, to implement various methods. The communication apparatus may be the terminal in any one of the first aspect to the fourth aspect, or an apparatus included in the terminal, for example, a chip or a chip system; or the communication apparatus may be the network device in either the fifth aspect or the seventh aspect, or an apparatus included in the network device, for example, a chip or a chip system. The communication apparatus includes a corresponding module, unit, or means (means) for implementing the methods. The module, unit, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and the possible implementations of the foregoing aspects. The transceiver module may include a receiving module and a sending module that are respectively configured to implement a receiving function and a sending function in any one of the foregoing aspects and the possible implementations of the foregoing aspects.

In some possible designs, the transceiver module may include a transceiver circuit, a transceiver machine, a transceiver, or a communication interface.

According to a twelfth aspect, a communication apparatus is provided, including a processor and a memory. The memory is configured to store computer instructions. When the processor executes the instructions, the communication apparatus is caused to perform the method according to any one of the foregoing aspects. The communication apparatus may be the terminal in any one of the first aspect to the fourth aspect, or an apparatus included in the terminal, for example, a chip or a chip system; or the communication apparatus may be the network device in either the fifth aspect or the seventh aspect, or an apparatus included in the network device, for example, a chip or a chip system.

According to a thirteenth aspect, a communication apparatus is provided, including a processor and a communication interface. The communication interface is configured to communicate with a module outside the communication apparatus. The processor is configured to execute a computer program or instructions, to cause the communication apparatus to perform the method according to any one of the foregoing aspects. The communication apparatus may be the terminal in any one of the first aspect to the fourth aspect, or an apparatus included in the terminal, for example, a chip or a chip system; or the communication apparatus may be the network device in either the fifth aspect or the seventh aspect, or an apparatus included in the network device, for example, a chip or a chip system.

According to a fourteenth aspect, a communication apparatus is provided, including at least one processor. The processor is configured to execute a computer program or instructions stored in a memory, to cause the communication apparatus to perform the method according to any one of the foregoing aspects. The memory may be coupled to the processor, or may be independent of the processor. The communication apparatus may be the terminal in any one of the first aspect to the fourth aspect, or an apparatus included in the terminal, for example, a chip or a chip system; or the communication apparatus may be the network device in either the fifth aspect or the seventh aspect, or an apparatus included in the network device, for example, a chip or a chip system.

According to a fifteenth aspect, a computer-readable storage medium is provided. The computer-readable storage medium stores a computer program or instructions. When the computer program or the instructions are run on a communication apparatus, the communication apparatus is caused to perform the method according to any one of the first aspect to the ninth aspect.

According to a sixteenth aspect, a computer program product including instructions is provided. When the computer program product runs on a communication apparatus, the communication apparatus is caused to perform the method according to any one of the first aspect to the ninth aspect.

According to a seventeenth aspect, a communication apparatus is provided (for example, the communication apparatus may be a chip or a chip system). The communication apparatus includes a processor, configured to implement functions in any one of the first aspect to the ninth aspect.

In some possible designs, the communication apparatus includes a memory, and the memory is configured to store necessary program instructions and data.

In some possible designs, when the apparatus is a chip system, the apparatus may include a chip, or may include a chip and another discrete component.

It may be understood that, when the communication apparatus provided in any one of the tenth aspect to the seventeenth aspect is a chip, a sending action/function of the communication apparatus may be understood as outputting information, and a receiving action/function of the communication apparatus may be understood as inputting information.

For technical effects brought by any one of the designs in the tenth aspect to the seventeenth aspect, refer to technical effects brought by different designs in the first aspect to the seventh aspect. Details are not described herein again.

### BRIEF DESCRIPTION OF DRAWINGS

FIG. 1 is a diagram of a structure of a communication system according to this application;
FIG. 2 is a diagram of a structure of another communication system according to this application;
FIG. 3 is a diagram of a UAI reporting procedure according to this application;
FIG. 4 is a schematic flowchart of a communication method according to this application;
FIG. 5 is a diagram of a time sequence of restarting a timer according to this application;
FIG. 6 is a schematic flowchart of a communication method according to this application;
FIG. 7 is a schematic flowchart of a communication method according to this application;
FIG. 8 is a diagram of a structure of a communication apparatus according to this application;
FIG. 9 is a diagram of a structure of another communication apparatus according to this application; and
FIG. 10 is a diagram of a structure of still another communication apparatus according to this application.

### DESCRIPTION OF EMBODIMENTS

In descriptions of this application, "/" represents an "or" relationship between associated objects unless otherwise specified. For example, A/B may represent A or B. In this application, "and/or" describes only an association relationship for describing associated objects and represents that three relationships may exist. For example, A and/or B may represent the following three cases: Only A exists, both A and B exist, and only B exists, where A and B may be singular or plural.

In the descriptions of this application, unless otherwise specified, "a plurality of" means two or more than two. "At least one of the following items (pieces)" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, in embodiments of this application, the words such as "first" and "second" are used for distinguishing between same items or similar items that have basically same functions or purposes. A person skilled in the art may understand that the words such as "first" and "second" do not limit a quantity or an execution sequence, and the words such as "first" and "second" do not indicate a definite difference.

In embodiments of this application, the words such as "example" or "for example" is used to represent an example, an illustration, or a description. Any embodiment or design described by "example" or "for example" in embodiments of this application should not be explained as being more preferred or having more advantages than another embodiment or design scheme. Exactly, use of the words such as "example" or "for example" is intended to present a related concept in a specific manner for ease of understanding.

It may be understood that an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments in any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in this application, "when" and "if" mean that corresponding processing is performed in an objective situation, are not intended to limit a time, do not require a determining action during implementation, and do not mean any other limitation.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatus provided in embodiments of this application may also correspondingly implement these features or functions. Details are not described herein.

In this application, unless otherwise specified, mutual reference may be made between same or similar parts of embodiments. In embodiments of this application, unless otherwise specified or a logical conflict occurs, terms and/or descriptions in different embodiments are consistent and may be referenced by each other, and different embodiments may be combined based on internal logical relationships between the embodiments to form a new embodiment. The following implementations of this application are not intended to limit the protection scope of this application.

The technical solutions provided in this application may be applied to various communication systems. The communication system may be a 3rd generation partnership project (3rd generation partnership project, 3GPP) communication system, for example, a 4th generation (4th generation, 4G) long term evolution (long term evolution, LTE) system, an LTE-advanced (LTE-Advanced, LTE-A) system, a 5th generation (5th generation, 5G) new radio (new radio, NR) system, a vehicle-to-everything (vehicle-to-everything, V2X) system, an LTE and NR hybrid networking system, a device-to-device (device-to-device, D2D) system, a machine-to-machine (machine-to-machine, M2M) communication system, internet of things (internet of things, IoT), a non-terrestrial network (non-terrestrial network, NTN), and another next-generation communication system. Alternatively, the communication system may be a non-3GPP communication system. This is not limited.

The foregoing communication systems applicable to this application are merely examples for description, and communication systems applicable to this application are not limited thereto. This is uniformly described herein. Details are not described below again.

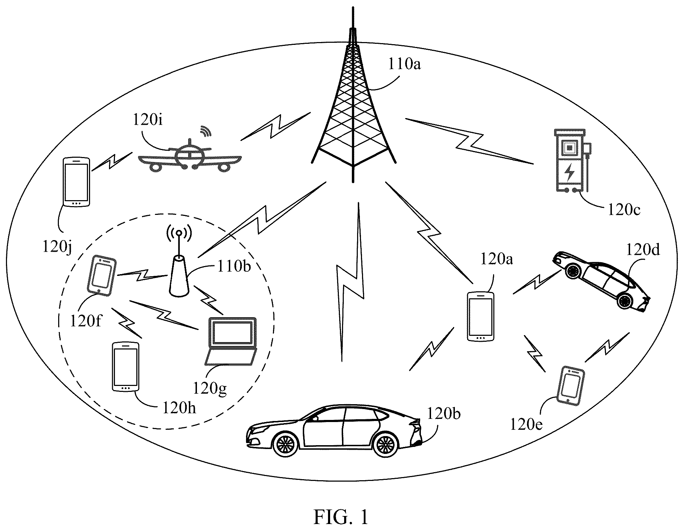

FIG. 1 shows an example of a communication system according to this application. The communication system includes at least one network device (for example, 110a and 110b in FIG. 1) and at least one terminal device (for example, 120a to 120j in FIG. 1).

Optionally, the terminal devices may communicate with each other in a wired or wireless manner, the terminal device may communicate with the network device in a wired or wireless manner, and the network devices may communicate with each other in a wired or wireless manner. FIG. 1 is merely a diagram. The communication system may further include another device, for example, may further include a wireless relay device, a wireless backhaul device, a core network device, and the like, which are not shown in FIG. 1. A quantity of network devices and a quantity of terminal devices in FIG. 1 are merely examples. The communication system may include more or fewer network devices or terminal devices than those shown in FIG. 1.

Optionally, the terminal device may be a user side device having a wireless transceiver function, or may be a chip or a chip system disposed in the device. The terminal device may also be referred to as user equipment (user equipment, UE), a terminal, an access terminal, a subscriber unit, a subscriber station, a mobile station (mobile station, MS), a remote station, a remote terminal, a mobile terminal (mobile terminal, MT), a user terminal, a wireless communication device, a user agent, a user apparatus, or the like. The terminal device may be, for example, a terminal device in IoT, V2X, D2D, M2M, a 5G network, or a future evolved public land mobile network (public land mobile network, PLMN). The terminal device may be deployed on land, including an indoor device, an outdoor device, a handheld device, or a vehicle-mounted device, may be deployed on water (for example, on a ship), or may be deployed in the air (for example, on an airplane, a balloon, or a satellite).

For example, the terminal device may be an uncrewed aerial vehicle, an IoT device (for example, a sensor, an electricity meter, or a water meter), a V2X device, a station (station, ST) in a wireless local area network (wireless local area network, WLAN), a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device or another processing device connected to a wireless modem, a vehicle-mounted device, a wearable device (which may also be referred to as an intelligent wearable device), a tablet computer or a computer having a wireless transceiver function, a virtual reality (virtual reality, VR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a vehicle having a vehicle-to-vehicle (vehicle-to-vehicle, V2V) communication capability, an intelligent connected vehicle, an uncrewed aerial vehicle having an uncrewed aerial vehicle (uncrewed aerial vehicle, UAV) to uncrewed aerial vehicle (UAV to UAV, U2U) communication capability, or the like. The terminal device may be mobile, or may be fixed. This is not specifically limited in this application.

Optionally, the network device may be a network side device having a wireless transceiver function, or may be a chip or a chip system disposed in the device, is located in a radio access network (radio access network, RAN) in a mobile communication system, and is configured to provide an access service for the terminal device. The network device may be an evolved NodeB (evolved NodeB, eNB or eNodeB) in an LTE or LTE-advanced (LTE-Advanced, LTE-A) system, for example, a conventional macro base station eNB and a micro base station eNB in a heterogeneous network scenario, or may be a next-generation NodeB (next-generation NodeB, gNodeB or gNB) in a 5G system, or may be a transmission reception point (transmission reception point, TRP), or may be a base station in a future evolved PLMN, or may be a broadband network gateway (broadband network gateway, BNG), an aggregation switch, or a non-3GPP access device, or may be a radio controller in a cloud radio access network (cloud radio access network, CRAN), or may be an access point (access point, AP) in a Wi-Fi system, or may be a wireless relay node or a wireless backhaul node, or may be a device that implements a base station function in IoT, V2X, D2D, or M2M. This is not specifically limited in embodiments of this application. For example, the base station in embodiments of this application may include base stations in various forms, for example, a macro base station, a micro base station (which is also referred to as a small cell), a relay station, and an access point. This is not specifically limited in embodiments of this application.

In some scenarios, the network device may alternatively be a module or unit that can implement some or all functions of the base station. For example, the network device may be a central unit (central unit, CU), a distributed unit (distributed unit, DU), a CU and a DU, a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, the network device may be a network device in an open radio access network (open RAN, ORAN) system or a module of the network device. In an ORAN system, the CU may also be referred to as an open (open, O)-CU, the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of a software module and a hardware module.

In some scenarios, the network device may also be referred to as a radio access network (radio access network, RAN) node, a RAN device, or an access network device, or the network device may be named in another manner. This is not specifically limited in this application.

In some scenarios, roles of the network device and the terminal device are relative. For example, the network element 120i in FIG. 1 may be a helicopter or an uncrewed aerial vehicle, and may be configured as a mobile base station. For the terminal device 120j that accesses the RAN through the network element 120i, the network element 120i is a base station. However, for the network element 110a, the network element 120i is a terminal device. The network device and the terminal device are sometimes referred to as communication apparatuses. For example, the network elements 110a and 110b in FIG. 1 may be understood as communication apparatuses having a base station function, and the network elements 120a to 120j may be understood as communication apparatuses having a terminal function.

Alternatively, all or some functions of the terminal device or the network device in this application may be implemented through a software function running on hardware, or may be implemented through a virtualized function instantiated on a platform (for example, a cloud platform). Alternatively, the terminal device or the network device in this application may be a logical node, a logical module, or software that can implement all or some functions of the terminal device or the network device.

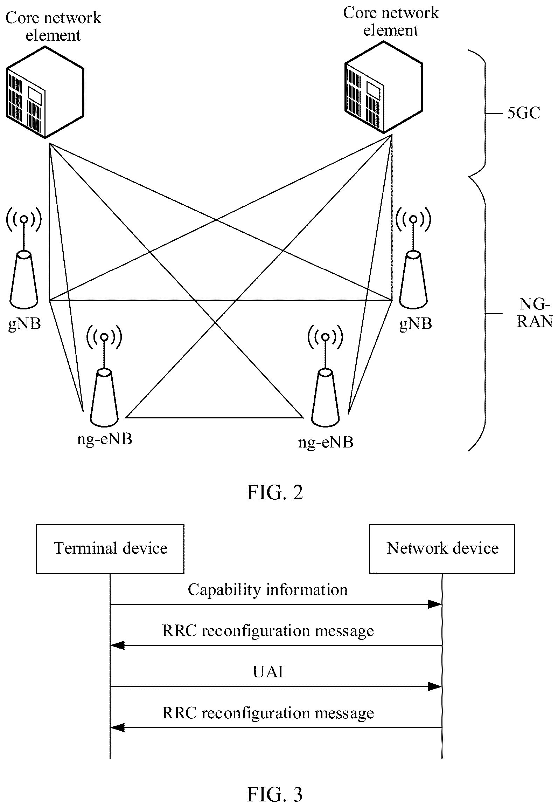

For example, the technical solutions provided in this application are applied to a 5G communication system. As shown in FIG. 2, the 5G communication system includes a 5G core network (5G core network, 5GC) and a 5G radio access network, which is also referred to as a next-generation RAN (next-generation RAN, NG-RAN).

For example, the 5GC may include a core network element, for example, an access and mobility management function (access and mobility management function, AMF) network element and a user plane function (user plane function, UPF) network element. The NG-RAN may include a 5G base station (for example, a gNB). Further, the NG-RAN may include a 4G base station (for example, an ng-eNB) connected to the 5GC. In the communication system, the network device may be a gNB or an ng-eNB.

When a serving network device of the terminal device is a gNB, the gNB is responsible for providing a user plane and control plane protocol function of 5G NR for the terminal device. When a serving network device of the terminal device is an ng-eNB, the ng-eNB is responsible for providing a user plane and control plane protocol function of 4G evolved universal terrestrial radio access (evolved universal terrestrial radio access, E-UTRA) for the terminal device.

It should be noted that the communication system described in embodiments of this application is intended to describe the technical solutions in embodiments of this application more clearly, but constitutes no limitation on the technical solutions provided in embodiments of this application. A person of ordinary skill in the art may learn that the technical solutions provided in embodiments of this application are also applicable to a similar technical problem as a network architecture evolves and a new service scenario emerges.

Currently, the terminal device may report user equipment assistance information (UE assistance information, UAI) to the network device, to indicate a preference value of a parameter that is recommended or desired to be used by the terminal device. After receiving the UAI reported by the terminal device, the network device may deliver a corresponding configuration to the terminal device based on the preference value indicated by the terminal device. For example, in the mechanism, an interaction procedure between the terminal device and the network device may be shown in FIG. 3.

Refer to FIG. 3. The terminal device first sends capability information to the network device, and correspondingly, the network device receives the capability information from the terminal device. The capability information indicates a type of UAI that the terminal device supports for reporting, or the capability information indicates specific parameters for which the terminal device supports recommending preference values in the UAI. For example, in an energy-saving scenario, parameters for which the terminal device supports recommending preference values in the UAI may include but are not limited to: a discontinuous reception (discontinuous reception, DRX) parameter, a maximum aggregated bandwidth, a maximum carrier component (carrier component, CC), a maximum quantity of multiple-input multiple-output (multiple-input multiple-output, MIMO) layers (layers), and a minimum scheduling offset.

For example, the DRX parameter may include a DRX cycle, on duration (on duration), and the like. The maximum aggregated bandwidth may be a maximum aggregated bandwidth on all uplink carriers and all downlink carriers. The maximum quantity of CCs, which may also be referred to as a maximum quantity of carriers, may be a maximum quantity of downlink or uplink secondary cells (secondary cells, SCells). The maximum quantity of MIMO layers may also be referred to as a maximum quantity of MIMO streams or a maximum quantity of MIMO transport layers. The minimum scheduling offset may be a minimum scheduling offset for cross-slot scheduling.

In addition, the UAI may further indicate a preference value of at least one of the following parameters, or carry information about a related characteristic corresponding to at least one of the following parameters: an uplink

(uplink, UL) frequency range 2 (frequency range 2, FR2) gap (Gap), a multi-universal subscriber identity module (multi-universal subscriber identity module, MUSIM) gap, a radio link monitoring (radio link monitoring, RLM) relaxation (Relaxation) state, a beam failure detection (beam failure detection, BFD) relaxation state, a secondary cell group (secondary cell group, SCG) deactivation (Deactivation) request, a radio resource control (radio resource control, RRC) connection release request, a radio resource management (radio resource management, RRM) measurement relaxation (Measurement Relaxation) criterion fulfillment status, propagation delay difference information (PropDelayDiffReport) of a service link (service link) between a serving cell and a neighboring cell, and in-device coexistence (in-device coexistence, IDC) information.

After receiving the capability information, the network device may configure, by using an RRC reconfiguration (RRCReconfiguration) message, a type of UAI that the terminal device is allowed to report, or configure a type of a parameter for which the terminal device is allowed to recommend a preference value. In addition, the network device may further configure a prohibit timer. Each type of UAI or parameter may correspond to one prohibit timer, and different types of UAI or parameters may correspond to different prohibit timers. For example, for the DRX parameter, the network device may configure a prohibit timer for the DRX parameter; and for the maximum aggregated bandwidth, the network device may configure a prohibit timer for the maximum aggregated bandwidth parameter. The prohibit timer is used to restrict the terminal device from frequently reporting the UAI. That is, during running of the prohibit timer, the terminal device is prohibited from reporting UAI of a corresponding type again to modify a preference value of a parameter or cancel a previously reported preference value of a parameter.

After receiving the RRC reconfiguration message, the terminal device may send UAI based on an actual requirement, to indicate a preference value of a corresponding parameter, and start the prohibit timer. After receiving the UAI of the terminal device, the network device may perform subsequent scheduling or configuration based on a preference value of a parameter that is recommended by the terminal device. For example, the network device may send an RRC reconfiguration message to the terminal device, to change an existing configuration based on the UAI of the terminal device.

Then, if the terminal device needs to modify or cancel the reported preference value, the terminal device may send the UAI again when the prohibit timer expires or is not running, to modify or cancel the reported preference value.

Based on the foregoing mechanism, the terminal device cannot cancel the reported preference value during the running of the prohibit timer. If a service requirement of a user changes during running of a timer, the terminal device cannot flexibly cancel a preference in a timely manner to adapt to a new service requirement. Consequently, user experience is affected. For example, it is assumed that the terminal device has reported an energy-saving preference, and after the network device changes a configuration based on the preference reported by the terminal device, the user runs an application with a low-latency and/or large-bandwidth requirement during the running of the prohibit timer. In this case, according to the foregoing mechanism, the terminal device can report the UAI again only after the prohibit timer expires, to cancel the energy-saving preference, so that the network device performs reconfiguration to meet a low-latency and/or large-bandwidth requirement of a service. Therefore, during the running of the prohibit timer, configuration based on the energy-saving preference may cause lagging, disconnection, and the like of the application. Consequently, user experience is degraded.

Based on this, this application provides a communication method, to redefine a mechanism for a terminal device to report that a preference value is to be canceled, so that the terminal device can send information used to cancel the preference value in a timely manner, and a network device can perform reconfiguration in a timely manner based on the information, thereby improving user experience.

The following describes the communication method provided in embodiments of this application with reference to the accompanying drawings. It can be understood that in embodiments of this application, the network device or the terminal device may perform some or all of the steps in embodiments of this application. These steps or operations are merely examples. In embodiments of this application, other operations or variations of various operations may be further performed. In addition, the steps may be performed in a sequence different from that presented in embodiments of this application, and possibly, not all the operations in embodiments of this application need to be performed.

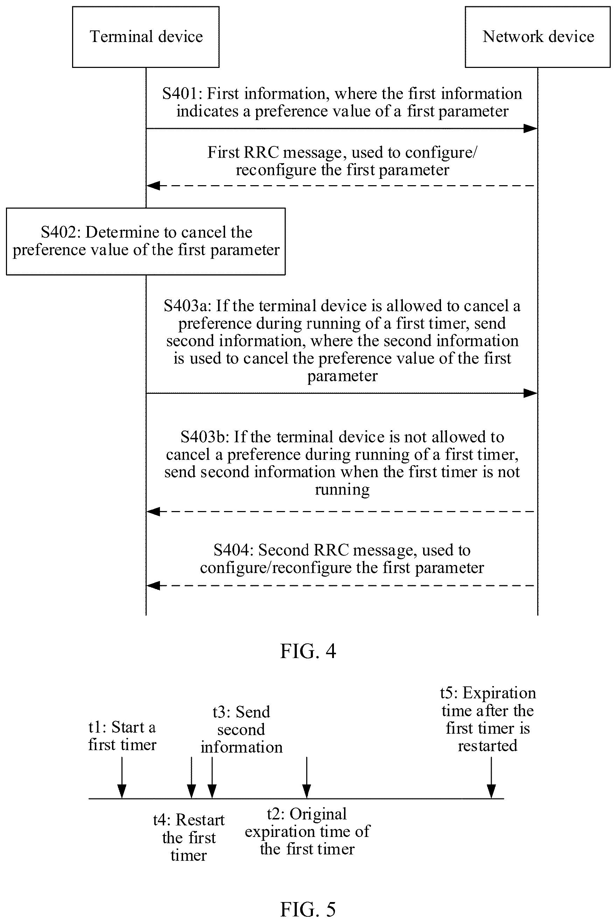

FIG. 4 shows a communication method according to an embodiment of this application. The communication method includes the following steps.

S401: A terminal device sends first information to a network device. Correspondingly, the network device receives the first information from the terminal device.

The first information indicates a preference value of a first parameter. For example, the preference value may be understood as a parameter value suggested or desired by the terminal device. Therefore, the preference value of the first parameter may also be understood as a desired value, a recommended value, or a suggested value of the first parameter.

Optionally, the first parameter includes at least one of the following: a DRX parameter, a maximum aggregated bandwidth, a maximum quantity of carriers, a maximum quantity of multiple-input multiple-output layers, a minimum scheduling offset, an FR2 UL gap, an MUSIM gap, MUSIM leave, RLM relaxation, BFD relaxation, SCG deactivation, RRM measurement relaxation, PropDelayDiffReport, and IDC. For explanations of the parameters, refer to the foregoing related descriptions. Details are not described herein again.

Optionally, the terminal device may send the first information in the following case: Since being configured to provide a preference value of the first parameter, the terminal device has not sent information that carries or indicates the preference value of the first parameter, or a current preference value of the first parameter is different from a preference value of the first parameter that is indicated last time.

In a possible manner, the first information may be information about a preference value of the first parameter reported by the terminal device for the first time, in other words, before sending the first information, the terminal device has not indicated a preference value of the first parameter to the network device. For example, the first time may be the first time after the terminal device is powered on, or the first time after the terminal device accesses the network device, or the first time after the terminal device is allowed to report the first parameter or the preference value of the first parameter.

In another possible manner, the first information may be information about a preference value of the first parameter that is reported by the terminal device not for the first time, in other words, before sending the first information, the terminal device has sent, to the network device, information indicating a preference value of the first parameter. In this scenario, the preference value of the first parameter that is indicated by the first information may be different from the preference value of the first parameter that is indicated by the terminal device last time.

Optionally, the first information may be UAI, or the first information may be carried in a UAI message. Certainly, the first information may alternatively be carried in another message or other signaling, for example, carried in an RRC message or uplink control information (uplink control information, UCI).

Optionally, to prevent the terminal device from frequently reporting preference information, the terminal device may further start a first timer. The first timer is used to prohibit the terminal device from reporting the preference information. In other words, during running of the first timer, the terminal device is prohibited from reporting the preference information. The first timer may also be referred to as a prohibit timer. For example, the preference information may indicate a preference of the terminal device for a parameter, or indicate a preference value of a parameter, or be used to cancel a preference of a parameter that has been sent.

In a possible implementation, that the first timer is used to prohibit the terminal device from reporting the preference information may be understood as follows: The first timer is used to prohibit the terminal device from updating a preference value reported last time (or prohibit the terminal device from reporting a new preference value), and is used to prohibit the terminal device from canceling the preference value reported last time. For example, the first timer may be *ProhibitTimer* defined in a current protocol. For example, when the first parameter is the DRX parameter, the first timer may be *drx-preference ProhibitTimer.*

Optionally, the first timer may be started before the terminal device sends the first information, or may be started after the terminal device sends the first information, or start time of the first timer may be the same as sending time of the first information.

Optionally, the terminal device may start the first timer in the following case: Since being configured to provide a preference value of the first parameter, the terminal device has not sent information that carries or indicates the preference value of the first parameter, or a current preference value of the first parameter is different from a preference value of the first parameter that is indicated last time. It should be noted that starting the first timer may be replaced with restarting the first timer.

Optionally, before step S401, the network device may configure the terminal device to provide or report the preference value of the first parameter. Alternatively, the network device may send configuration information of the first timer to the terminal device, to configure duration of the first timer. Refer to related descriptions in the procedure shown in FIG. 3. Details are not described herein again.

Optionally, after receiving the first information, the network device may send a first RRC message to the terminal device based on the preference value of the first parameter that is indicated by the first information, where the first RRC message is used to configure/reconfigure/modify the first parameter. For example, a value of the first parameter configured by using the first RRC message is the preference value of the first parameter that is indicated by the first information. In this case, it may be considered that the preference value of the first parameter that is indicated by the first information is a currently effective value of the first parameter.

In a possible implementation, that the first RRC message is used to reconfigure the first parameter may also be understood as follows: The first RRC message is used to reconfigure a parameter related to the first parameter, or to reconfigure a parameter used to determine the first parameter.

For example, the first parameter is the maximum aggregated bandwidth. The preference value of the first parameter that is indicated by the first information represents a maximum aggregated bandwidth desired by the terminal device. A bandwidth part (bandwidth part, BWP) on an uplink carrier or a downlink carrier may be configured by using the first RRC message. A sum of bandwidths of active BWPs on all carriers is an aggregated bandwidth. The aggregated bandwidth may be less than or equal to the maximum aggregated bandwidth indicated by the first information. For example, the first parameter is the maximum quantity of carriers. The preference value of the first parameter that is indicated by the first information represents a maximum quantity of secondary carriers desired by the terminal device. At least one secondary carrier may be configured by using the first RRC message. For example, the first RRC message carries a related configuration of the at least one secondary carrier. A quantity of configured secondary carriers may be less than or equal to the maximum quantity of carriers indicated by the first information.

For example, the first parameter is the maximum quantity of multiple-input multiple-output layers. The preference value of the first parameter that is indicated by the first information represents a maximum quantity of multiple-input multiple-output layers desired by the terminal device. A quantity of multiple-input multiple-output layers on each uplink or downlink carrier may be configured by using the first RRC message. The configured quantity of multiple-input multiple-output layers on each carrier may be less than or equal to the maximum quantity of multiple-input multiple-output layers indicated by the first information.

For example, the first parameter is the DRX parameter. The preference value of the first parameter that is indicated by the first information represents a DRX parameter desired by the terminal device. A DRX parameter may be configured by using the first RRC message. The configured DRX parameter may be less than or equal to the DRX parameter indicated by the first information. For example, if the DRX parameter is a DRX cycle, the DRX cycle configured by using the first RRC message may be less than or equal to the DRX cycle indicated by the first information.

For example, the first parameter is the FR2 UL gap/MUSIM gap. The preference value of the first parameter that is indicated by the first information represents an FR2 UL gap/MUSIM gap configuration desired by the terminal device. An FR2 UL gap/MUSIM gap may be configured by using the first RRC message. The configured FR2 UL gap/MUSIM gap may be the FR2 UL gap/MUSIM gap indicated by the first information.

In an optional manner, the first RRC message may be a 1^{st} RRC message sent by the network device after receiving the first information, or a 1^{st} RRC message received by the terminal device after sending the first information. Further, the first RRC message may be a 1^{st} RRC message that is used to configure/reconfigure/modify the first parameter and that is sent by the network device after receiving the first information, or a 1^{st} RRC message that is used to configure/reconfigure/modify the first parameter and that is received by the terminal device after sending the first information. The first RRC message may be an RRC reconfiguration message.

For example, the first RRC message may be understood as a response message to the first information. That is, the network device sends the first RRC message to the terminal device in response to the first information.

S402: The terminal device determines to cancel the preference value of the first parameter.

Optionally, canceling the preference value of the first parameter may be understood as: canceling the preference value of the first parameter that is indicated last time, or the terminal device no longer has the preference value of the first parameter or no longer has the preference for the first parameter, or invalidating the preference value of the first parameter, or a requirement corresponding to the current preference value of the first parameter is higher than a requirement corresponding to the preference value of the first parameter that is indicated last time.

For example, the preference value of the first parameter that is indicated last time may be the preference value of the first parameter that is indicated by the first information. When the preference value of the first parameter that is indicated by the first information is a currently effective parameter value, it may be considered that the requirement corresponding to the current preference value of the first parameter is higher than a requirement corresponding to the currently effective value of the first parameter.

For example, the first parameter is the maximum aggregated bandwidth. That the requirement corresponding to the current preference value of the first parameter is higher than the requirement corresponding to the preference value of the first parameter that is indicated last time may mean that a current preference value of the maximum aggregated bandwidth is greater than a preference value of the maximum aggregated bandwidth that is indicated last time.

Optionally, that the terminal device determines to cancel the preference value of the first parameter may also be understood as follows: The terminal device determines that the preference value of the first parameter needs to be canceled. A reason why the terminal device determines to cancel the preference value of the first parameter may be that a service requirement of the terminal device changes, or a currently effective preference value of the first parameter cannot meet a current service requirement of the terminal device. Further, the reason may be that the service requirement of the terminal device changes during the running of the first timer.

After step S402, the following step S403a or S403b may be performed.

S403a: If the terminal device is allowed to cancel a preference during the running of the first timer, the terminal device sends second information to the network device. Correspondingly, the network device receives the second information from the terminal device.

Specifically, the second information is used to cancel the preference value of the first parameter. For related descriptions of canceling the preference value of the first parameter, refer to the descriptions in step S402. Details are not described herein again.

In other words, the terminal device sends the second information to the network device if the terminal device determines to cancel the preference value of the first parameter and the terminal device is allowed to cancel the preference during the running of the first timer.

Optionally, that the terminal device is allowed to cancel the preference during the running of the first timer may be replaced with the following description: Cancellation of a preference value of a parameter by the terminal device is not restricted by the first timer, or canceling the preference during the running of the first timer by the terminal device is allowed.

Optionally, that the terminal device sends the second information to the network device if the terminal device determines to cancel the preference value of the first parameter and the terminal device is allowed to cancel the preference during the running of the first timer may also be understood as follows: The terminal device sends the second information to the network device if the terminal device determines to cancel the preference value of the first parameter and it is determined that the terminal device is allowed to cancel the preference during the running of the first timer.

In step S403a, that the terminal device sends the second information to the network device may include: The terminal device sends the second information to the network device during the running of the first timer. Correspondingly, the network device receives the second information from the terminal device during the running of the first timer. That is, when the terminal device is allowed to cancel the preference during the running of the first timer, if the terminal device determines, during the running of the first timer, that the preference value of the first parameter needs to be canceled, the terminal device may send, to the network device during the running of the first timer without being restricted by the first timer, the second information used to cancel the preference value of the first parameter.

Optionally, when the terminal device sends the second information or determines to send the second information, the terminal device may further restart the first timer. The first timer may be restarted before the terminal device sends the second information, or may be restarted after the terminal device sends the second information, or restart time of the first timer may be the same as sending time of the second information. This is not specifically limited in this application.

For example, that the terminal device determines to send the second information may also be understood as follows: The terminal device determines to cancel the preference, or the terminal device determines to cancel the preference value of the first parameter. For example, the terminal device determines to cancel the preference value of the first parameter that is indicated by the first information.

Based on the implementation, when the terminal device sends the second information, because the terminal device notifies the network device that the preference value of the first parameter is to be canceled, it is equivalent to the terminal device requesting the network device to perform reconfiguration. If the first timer is not restarted, after original expiration time of the first timer, the terminal device may send information to the network device again to change the preference value of the first parameter, that is, the terminal device requests the network device to perform reconfiguration again. In other words, the terminal device may frequently request the network device to perform reconfiguration, which increases processing complexity of the network device. If the first timer is restarted when the terminal device sends the second information, compared with the original expiration time of the first timer, actual expiration time of the first timer is delayed, and time during which the terminal device is restricted from changing the preference value of the first parameter is prolonged. This can restrict the terminal device from frequently changing the preference value of the first parameter, thereby reducing the processing complexity of the network device.

For example, as shown in FIG. 5, an example in which the first timer is started at a moment t1, and an original expiration moment of the first timer is a moment t2 is used. It is assumed that the terminal device sends the second information at a moment t3. In this case, if the first timer is not restarted, the terminal device may change the preference value of the first parameter after the moment t2, that is, the terminal device is restricted from changing the preference value of the first parameter between the moment t3 and the moment t2. If the terminal device restarts the first timer at a moment t4, after the first timer is restarted, expiration time of the first timer is delayed to a moment t5. That is, the terminal device is restricted from changing the preference value of the first parameter between the moment t4 and the moment t5, and the terminal device can change the preference value of the first parameter only after the moment t5. Compared with not restarting the first timer, restarting the first timer can prolong time during which the terminal device is prohibited from changing the preference value of the first parameter, thereby reducing the processing complexity of the network device.

In a first possible implementation, the second information may be an indicator (indicator) of 1 bit, and is used to cancel the preference value of the first parameter when a value of the 1 bit is "0" or "1".

In a second possible implementation, the second information may be an enumerated value, and is used to cancel the preference value of the first parameter when the enumerated value is "true" or "false".

In a third possible implementation, the second information may be an information element (information element, IE) or a field with content being null (null). That is, the terminal device may send the information element or field with a null value, and the information element or the field carry no content.

Optionally, in the first possible implementation, the second possible implementation, or the third possible implementation, the terminal device may further indicate a new preference value of the first parameter to the network device. For ease of description, in this embodiment of this application, the preference value of the first parameter that is indicated by the first information is referred to as a first preference value of the first parameter or an old preference value of the first parameter. The new preference value of the first parameter is referred to as a second preference value of the first parameter.

For example, the second preference value of the first parameter may be a preference value determined by the terminal device based on a current service requirement. A requirement corresponding to the second preference value of the first parameter may be higher than a requirement corresponding to the first preference value of the first parameter. When the first preference value of the first parameter is a currently effective parameter value, it may be considered that the requirement corresponding to the second preference value of the first parameter is higher than the requirement corresponding to the currently effective value of the first parameter.

In a fourth possible implementation, the second information may be the second preference value of the first parameter or the new preference value of the first parameter. In this scenario, the second information is used to cancel the first preference value or the old preference value of the first parameter. In addition, the second information may further indicate that the current preference value of the first parameter is the second preference value. For descriptions of the second preference value, refer to related descriptions in the foregoing first and second possible implementations. Details are not described herein again.

Optionally, the second information may be UAI. In addition, the second information may be carried in a UAI message. Certainly, the second information may alternatively be carried in another message or other signaling, for example, carried in an RRC message or UCI.

S403b: If the terminal device is not allowed to cancel a preference during the running of the first timer, the terminal device sends second information to the network device when the first timer is not running. Correspondingly, the network device receives the second information from the terminal device. For implementation of the second information, refer to the related descriptions in step S403b. Details are not described herein again.

In other words, if the terminal device determines to cancel the preference value of the first parameter and the terminal device is not allowed to cancel the preference during the running of the first timer, the terminal device sends the second information to the network device when the first timer is not running.

Optionally, that the first timer is not running may include: The first timer expires. That is, if the terminal device is not allowed to cancel the preference during the running of the first timer, the terminal device sends the second information to the network device after the first timer expires.

In a possible implementation, the second information in step S403b may be replaced with information indicating a third preference value of the first parameter. The third preference value of the first parameter may be different from the second preference value of the first parameter. The third preference value of the first parameter may be determined by the terminal device based on a service requirement of the terminal device after the first timer expires. That is, the terminal device may determine the second preference value of the first parameter based on the service requirement of the terminal device in step S402. After the first timer expires, the third preference value of the first parameter is determined again based on the service requirement of the terminal device. If the service requirement of the terminal device changes after the first timer expires, the third preference value may be different from the second preference value.

Optionally, after receiving the second information, the network device may perform the following step S404.

S404: The network device sends a second RRC message to the terminal device. Correspondingly, the terminal device receives the second RRC message from the network device.

The second RRC message is used to configure/reconfigure/modify the first parameter. For example, the second RRC message may be understood as a response message to the second information. That is, the network device sends the second RRC message to the terminal device in response to the second information. For descriptions of the second RRC message being used to reconfigure the first parameter, refer to the related descriptions of the first RRC message being used to reconfigure the first parameter in step S401. Details are not described herein again.

In an optional manner, the second RRC message may be a 1^{st} RRC message sent by the network device after receiving the second information, or a 1^{st} RRC message received by the terminal device after sending the second information. Further, the second RRC message may be a 1^{st} RRC message that is used to configure/reconfigure/modify the first parameter and that is sent by the network device after receiving the second information, or a 1^{st} RRC message that is used to configure/reconfigure/modify the first parameter and that is received by the terminal device after sending the second information. The second RRC message may be an RRC reconfiguration message.

Optionally, a value of the first parameter configured by using the second RRC message (briefly referred to as a first value of the first parameter) may match a current service requirement of the terminal device. For example, the first value of the first parameter may meet at least one of the following:
(1) The first value of the first parameter may be the foregoing second preference value. For example, when the terminal device reports the second preference value of the first parameter, the network device may use the second preference value as the first value of the first parameter.
(2) The first value of the first parameter may be a maximum value of the first parameter that is supported by the terminal device.
(3) The first value of the first parameter may be a value configured by the network device for the first parameter before the terminal device indicates any preference value of the first parameter.
(4) The first value of the first parameter may be a preference value of the first parameter that is last indicated by the terminal device before sending the first information.
(5) The first value of the first parameter may be determined based on a preference value of the first parameter (briefly referred to as the first preference value) that is indicated by the first information.

For example, when the first parameter is the maximum aggregated bandwidth and/or the maximum quantity of carriers, the first value of the first parameter may be a sum of the first preference value and an offset, where the offset may be a positive integer. That is, a maximum aggregated bandwidth/a maximum quantity of carriers represented by the first value may be greater than a maximum aggregated bandwidth/a maximum quantity of carriers represented by the first preference value.

(6) The first value of the first parameter may be determined by the network device based on quality of service (quality of service, QoS) information of a current service of the terminal device.

Optionally, after receiving the second RRC message, the terminal device may enable configuration of the second RRC message. For example, the terminal device may make the first value of the first parameter effective.

In a possible implementation, when the second RRC message is used to reconfigure a parameter related to the first parameter or a parameter used to determine the first parameter, the first parameter in the foregoing six conditions may be adaptively replaced with a second parameter for understanding. The second parameter is a parameter related to the first parameter or a parameter used to determine the first parameter.

Based on the foregoing solution, after the terminal device indicates the preference value of the first parameter by using the first information, if the terminal device determines to cancel the preference value of the first parameter and the terminal device is allowed to cancel the preference during the running of the first timer, the terminal device may send, to the network device, the second information used to cancel the preference value of the first parameter. The terminal device is allowed to cancel the preference during the running of the first timer. Therefore, if the terminal device determines to cancel the preference value of the first parameter, the terminal device can send, in a timely manner, the second information used to cancel a preference value of a parameter. In this way, the network device can configure, in a timely manner based on the second information, a parameter value that matches a current service requirement, thereby improving user experience.

In some implementation scenarios, in the method shown in FIG. 4, whether the terminal device is allowed to cancel the preference during the running of the first timer may be indicated by the network device. For example, before step S403a or S403b, the network device may send third information to the terminal device. Correspondingly, the terminal device receives the third information from the network device.

In a possible implementation, the third information indicates whether the terminal device is allowed to cancel the preference during the running of the first timer. If the third information indicates that the terminal device is allowed to cancel the preference during the running of the first timer, step S403a is performed. If the third information indicates that the terminal device is not allowed to cancel the preference during the running of the first timer, step S403b is performed.

For example, the third information may be information of 1 bit. When a value of the 1 bit is a first value, it indicates that the terminal device is allowed to cancel the preference during the running of the first timer. When a value of the 1 bit is a second value, it indicates that the terminal device is not allowed to cancel the preference during the running of the first timer. For example, the first value may be "1", and correspondingly, the second value may be "0"; or the first value may be "0", and correspondingly, the second value may be "1".

In another possible implementation, the third information indicates that the terminal device is allowed to cancel the preference during the running of the first timer. That is, if the network device allows the terminal device to cancel the preference during the running of the first timer, the network device may send the third information. For example, the third information may be a flag (flag). If the network device does not allow the terminal device to cancel the preference during the running of the first timer, the network device may not send the third information.

For the terminal device, if the terminal device receives the third information, it may be determined that the terminal device is allowed to cancel the preference during the running of the first timer. If the terminal device does not receive the third information, it may be determined that the terminal device is not allowed to cancel the preference during the running of the first timer.

Optionally, in the foregoing two possible implementations, the third information may be carried in the first RRC message, in other words, the third information may be carried in the response message to the first information, or the third information and the configuration information of the first timer may be carried in a same message, or the third information and the configuration information of the first timer may be carried in different messages. This is not specifically limited in this application.

In some implementation scenarios, in the method shown in FIG. 4, whether the terminal device is allowed to cancel the preference during the running of the first timer may be defined in a protocol.

For example, a description may be added to a protocol to indicate that the terminal device is allowed to cancel the preference during the running of the first timer, and the terminal device that supports the protocol may determine that the terminal device is allowed to cancel the preference during the running of the first timer. If the description is not added to the protocol, the terminal device that supports the protocol may determine that the terminal device is not allowed to cancel the preference during the running of the first timer.

In some implementation scenarios, before sending the second information, the terminal device may further send fourth information to the network device. Correspondingly, the network device receives the fourth information from the terminal device. The fourth information meets at least one of the following:

The fourth information is used to request the third information;
the fourth information is used to request permission for the terminal device to cancel the preference during the running of the first timer;
the fourth information indicates that the terminal device has a requirement for canceling the preference;
the fourth information is used to request that cancellation of the preference is not restricted by the first timer;
the fourth information is used to request permission for the terminal device to cancel the preference without being restricted by the first timer;
the fourth information is used to notify the network device that the terminal device may cancel the preference;
the fourth information indicates that the terminal device supports canceling the preference; or
the fourth information indicates that the terminal device supports canceling the preference without being restricted by the first timer (or indicates that the terminal device supports cancellation of the preference not restricted by the first timer).

Optionally, if the fourth information indicates that the terminal device supports canceling the preference, or indicates that the terminal device supports canceling the preference without being restricted by the first timer, the fourth information may be considered as capability information of the terminal device, and indicates a capability of the terminal device.

Optionally, the fourth information and the capability information of the terminal device may be carried in a same message, or the fourth information may be carried in the capability information of the terminal device, or the fourth information may be carried in a UAI message. In addition, the fourth information and the first information may be carried in a same message, or the fourth information and the first information may be carried in different messages. This is not specifically limited in this application.

Optionally, when whether the terminal device is allowed to cancel the preference during the running of the first timer is indicated by the network device, there is no necessary logical dependency relationship between whether the network device sends the third information and whether the terminal device sends the fourth information. When the terminal device sends the fourth information, the network device may send the third information or may not send the third information. Even if the network device sends the third information, the third information may indicate that the terminal device is allowed to cancel the preference during the running of the first timer, or may indicate that the terminal device is not allowed to cancel the preference during the running of the first timer.

Similarly, when the terminal device does not send the fourth information, the network device may send the third information or may not send the third information. Even if the network device sends the third information, the third information may indicate that the terminal device is allowed to cancel the preference during the running of the first timer, or may indicate that the terminal device is not allowed to cancel the preference during the running of the first timer.

In other words, whether the network device sends the third information and that the third information indicates whether the terminal device is allowed to cancel the preference during the running of the first timer are irrelevant to whether the network device receives the fourth information from the terminal device.

Certainly, the network device may alternatively send the third information depending on whether the fourth information is received. For example, when the network device has received the fourth information, the network device sends the third information, where the third information may indicate that the terminal device is allowed to cancel the preference during the running of the first timer. When the network device has not received the fourth information, the network device may not send the third information, or the network device sends the third information, where the third information indicates that the terminal device is not allowed to cancel the preference during the running of the first timer. This is not specifically limited in this application.

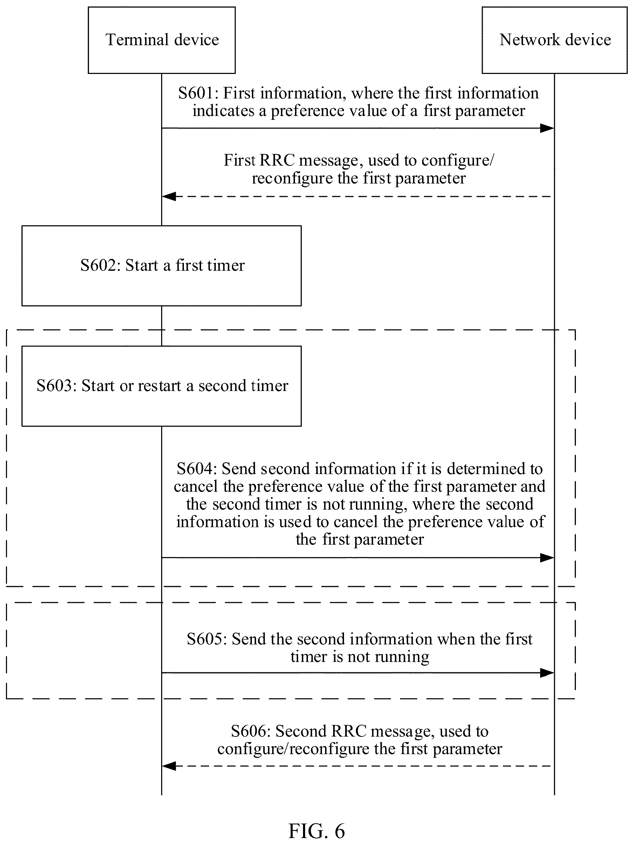

In the method shown in FIG. 4, the terminal device may send the second information depending on whether the terminal device is allowed to cancel the preference during the running of the first timer. In addition, this application further provides a communication method. In the method, a separate timer may be added for canceling a preference, and a terminal device may cancel the preference based on the added timer. As shown in FIG. 6, the method includes the following steps.

S601: The terminal device sends first information to a network device. Correspondingly, the network device receives the first information from the terminal device. The first information indicates a preference value of a first parameter.

S602: The terminal device starts a first timer. The first timer is used to prohibit the terminal device from reporting preference information. For detailed implementation of step S601 and step S602, refer to related descriptions in step S401. Details are not described herein again.

It should be noted that there is no necessary sequence between step S601 and step S602. Step S601 may be performed before step S602, or step S602 may be performed before step S601, or step S601 and step S602 may be performed simultaneously.

Optionally, before step S601, the network device may configure the terminal device to provide or report the preference value of the first parameter. In addition, the network device may further configure the first timer for the terminal device. In addition, after receiving the first information, the network device may send a first RRC message to the terminal device. Refer to the related descriptions in step S401. Details are not described herein again.

S603: The terminal device starts or restarts a second timer.

The second timer is used to prohibit the terminal device from canceling a preference. For example, that the second timer is used to prohibit the terminal device from canceling the preference may also be understood as follows: During running of the second timer, the terminal device is prohibited from canceling the preference, or during running of the second timer, the terminal device is prohibited from sending information used to cancel the preference.

Optionally, duration of the second timer is less than duration of the first timer. Based on the possible implementation, if the duration of the second timer is less than the duration of the first timer, the second timer may expire before the first timer expires. That is, time during which the terminal device is prohibited from canceling the preference is shortened, thereby helping cancel the preference in a timely manner.

In a possible implementation, the duration of the second timer is a fixed value. The fixed value may be predefined in a protocol, or may be configured by the network device, or may be negotiated between the network device and the terminal device. This is not specifically limited in this application.

In another possible implementation, the duration of the second timer is not a fixed value, or the duration of the second timer is configurable. For example, the duration of the second timer is one of a plurality of candidate duration values. For example, a plurality of candidate duration values, such as 1 second (second, s), 2s, and 3s, may be defined in a protocol. The network device may select one from the plurality of candidate duration values as the duration of the second timer, and configure the duration for the terminal device. Alternatively, the network device may determine the duration of the second timer based on a current service requirement of the terminal device, and configure the duration for the terminal device.

In still another possible implementation, the duration of the second timer may be determined by the terminal device. For example, the terminal device may determine the duration of the second timer based on a current service requirement. For example, if the second timer is allowed to be used, the terminal device may determine the duration of the second timer based on the current service requirement, and perform step S603.

Optionally, before step S603, the method further includes: The network device sends fifth information to the terminal device. Correspondingly, the terminal device receives the fifth information from the network device. The fifth information indicates at least one of the following: The fifth information indicates the duration of the second timer; the fifth information indicates whether the second timer is allowed to be used; the fifth information indicates whether the second timer is available; the fifth information is used to enable or disable the second timer; or the fifth information indicates whether the terminal device is allowed to cancel the preference during running of the first timer. For implementation of the fifth information, refer to related descriptions of the third information. Details are not described herein again.

For example, when the duration of the second timer is a fixed value, and the fixed value is predefined in a protocol, the fifth information may indicate that the second timer is allowed to be used, the second timer is available, the second timer is enabled, or the terminal device is allowed to cancel the preference during the running of the first timer. After receiving the fifth information, the terminal device may determine the duration of the second timer based on the protocol. When the duration of the second timer is a fixed value, and the fixed value is configured by the network device, or when the duration of the second timer is not a fixed value, the fifth information may indicate the duration of the second timer. For example, the fifth information may include the duration of the second timer, or the fifth information may include an index corresponding to the duration of the second timer.

It may be understood that, if the fifth information indicates the duration of the second timer, it implicitly indicates that the second timer is allowed to be used, the second timer is available, the second timer is enabled, or the terminal device is allowed to cancel the preference during the running of the first timer.

Optionally, if the fifth information indicates the duration of the second timer, or indicates that the second timer is allowed to be used, the second timer is available, the second timer is enabled, or the terminal device is allowed to cancel the preference during the running of the first timer, the terminal device performs step S603, and performs the following step S604 after S603. If the fifth information indicates that the second timer is not allowed to be used, the second timer is unavailable, the second timer is disabled, or the terminal device is not allowed to cancel the preference during the running of the first timer, the terminal device performs the following step S605.

In a possible implementation, the fifth information and configuration information of the first timer may be carried in a same message. For example, before step S401, the network device may send a third RRC message to the terminal device, where the third RRC message may include the fifth information and the configuration information of the first timer. The third RRC message may be an RRC reconfiguration message. For example, the third RRC message is sent after the first RRC message.

In another possible implementation, the fifth information may be carried in the first RRC message, in other words, the fifth information may be carried in a response message to the first information. For implementation of the first RRC message, refer to related descriptions in the method shown in FIG. 4. Details are not described herein again.

Optionally, when the duration of the second timer is a fixed value, and the fixed value is predefined in a protocol, the network device may not send the fifth information. In this scenario, it may be considered, by default, that the terminal device may be allowed to use the second timer, the second timer is available, or the terminal device is allowed to cancel the preference during the running of the first timer. That is, in this scenario, when the second timer and the duration of the second timer are defined in a protocol, the terminal device may perform step S603 without requiring control from the network device, and perform the following step S604 after step S603.

For time at which the second timer is started or restarted, at least one of the following may be met.

In a first possible implementation, start time of the first timer is the same as start time of the second timer. For example, in this scenario, the fifth information may be carried in the third RRC message, in other words, the fifth information and the configuration information of the first timer may be carried in a same message.

In a second possible implementation, after receiving the first RRC message, the terminal device starts or restarts the second timer. For example, in this scenario, the fifth information may be carried in the third RRC message or in the first RRC message, or the fifth information may be carried in the third RRC message and the first RRC message, in other words, both the third RRC message and the first RRC message may carry the fifth information.

Optionally, when both the third RRC message and the first RRC message carry the fifth information, content indicated by the fifth information carried in the third RRC message may be different from content indicated by the fifth information carried in the first RRC message. For example, the duration of the second timer that is indicated by the fifth information carried in the first RRC message may be less than the duration of the second timer that is indicated by the fifth information carried in the third RRC message. In this scenario, the terminal device may use an indication of the last received fifth information.

In a third possible implementation, the terminal device starts or restarts the second timer when determining to send second information. The second information is used to cancel the preference value of the first parameter. Refer to related descriptions in step S403a. Details are not described herein again.

For example, that the terminal device determines to send the second information may also be understood as follows: The terminal device determines to cancel the preference, or the terminal device determines to cancel the preference value of the first parameter. In addition, in this scenario, the fifth information may be carried in the third RRC message or in the first RRC message, or the fifth information may be carried in the third RRC message and the first RRC message.

Optionally, the second timer in this embodiment of this application may also be referred to as a cancellation timer. Certainly, the second timer may alternatively have another name, for example, a preference cancellation timer. This is not specifically limited in this application.

S604: The terminal device sends the second information to the network device if it is determined to cancel the preference value of the first parameter and the second timer is not running. Correspondingly, the network device receives the second information from the terminal device.

For implementation of the terminal device determining to cancel the preference value of the first parameter, refer to related descriptions in step S402. For implementation of the second information, refer to the related descriptions in step S403a. Details are not described herein again.

Optionally, that the second timer is not running may also be understood as that the second timer expires. That is, the terminal device sends the second information to the network device if it is determined to cancel the preference value of the first parameter and the second timer expires. In other words, the terminal device is not allowed to cancel the preference during the running of the second timer, or cancellation of the preference by the terminal device is restricted by the second timer.

Optionally, when the second timer expires, the first timer may not expire, in other words, the first timer is still running. Therefore, that the terminal device sends the second information to the network device may also be understood as follows: The terminal device sends the second information to the network device during the running of the first timer. Correspondingly, the network device receives the second information from the terminal device during the running of the first timer. In addition, when the terminal device sends the second information or determines to send the second information, the terminal device may further restart the first timer. Refer to the related descriptions in step S403a. Details are not described herein again.

S605: Send the second information to the network device when the first timer is not running. Correspondingly, the network device receives the second information from the terminal device. For implementation of the second information, refer to the related descriptions in step S403b. Details are not described herein again.

In other words, if the fifth information indicates that the second timer is not allowed to be used, the second timer is unavailable, the second timer is disabled, or the terminal device is not allowed to cancel the preference during the running of the first timer, the terminal device sends the second information to the network device when the first timer is not running.

In a possible implementation, the second information in step S605 may be replaced with information indicating a third preference value of the first parameter. Refer to the related descriptions in step S403b. Details are not described herein again.

In some implementation scenarios, the first timer may expire earlier than the second timer, in other words, expiration time of the first timer occurs before expiration time of the second timer. In this scenario, the terminal device may send the second information to the network device when the first timer is not running. In this case, sending time of the second information may occur during the running of the second timer. In other words, in this scenario, the solution of this application may be understood as follows: The terminal device starts the first timer and the second timer, and sends the second information to the network device if it is determined to cancel the preference value of the first parameter and a third timer is not running. The third timer is a timer that first expires in the first timer and the second timer.

Alternatively, in this scenario, the solution of this application may be understood as follows: The terminal device starts the first timer and the second timer, and sends the second information to the network device if it is determined to cancel the preference value of the first parameter and at least one of the first timer and the second timer is not running.

Optionally, after receiving the second information, the network device may further perform the following step S606.

S606: The network device sends a second RRC message to the terminal device. Correspondingly, the terminal device receives the second RRC message from the network device. The second RRC message is used to configure/reconfigure/modify the first parameter. Refer to the related descriptions in step S404. Details are not described herein again.

Based on the solution, in addition to the first timer, the terminal device further starts or restarts the second timer, and sends, to the network device, information used to cancel the preference, if it is determined to cancel a reported preference value of a parameter and the second timer is not running. That is, the terminal device may not be restricted by the first timer when canceling the preference, and only needs to determine whether the second timer is running. The duration of the second timer as an added timer may be flexibly adjusted, so that the terminal device can send, in a timely manner, the information used to cancel the preference, and the network device can update a configuration in a timely manner, to make a parameter configuration match a current service requirement, thereby improving user experience. In addition, the second information is sent when the second timer is not running, in other words, the terminal device is not allowed to cancel the preference during the running of the second timer. Therefore, the terminal device can be restricted from immediately canceling the preference after reporting the preference, that is, the terminal device can be restricted from frequently requesting the network device to perform configuration, thereby reducing implementation complexity of the network device.

In some implementation scenarios of the method shown in FIG. 6, before sending the second information, the terminal device may further send fourth information to the network device. Correspondingly, the network device receives the fourth information from the terminal device. The fourth information meets at least one of the following:
the fourth information is used to request permission for the terminal device to cancel the preference during the running of the first timer;
the fourth information is used to request permission to send the second information when the second timer is not running;
the fourth information indicates that the terminal device has a requirement for canceling the preference;
the fourth information is used to request that cancellation of the preference is not restricted by the first timer;
the fourth information is used to request permission for the terminal device to cancel the preference without being restricted by the first timer;
the fourth information is used to notify the network device that the terminal device may cancel the preference;
the fourth information indicates that the terminal device supports canceling the preference; or
the fourth information indicates that the terminal device supports canceling the preference without being restricted by the first timer (or indicates that the terminal device supports cancellation of the preference not restricted by the first timer).

Optionally, the fourth information and capability information of the terminal device may be carried in a same message, or the fourth information may be carried in the capability information of the terminal device, or the fourth information may be carried in a UAI message. In addition, the fourth information and the first information may be carried in a same message, or the fourth information and the first information may be carried in different messages. This is not specifically limited in this application.

Optionally, the terminal device may send the fourth information to the network device for a plurality of times. For example, the terminal device may send the fourth information to the network device once when sending the capability information. In addition, the terminal device may further send the fourth information to the network device once when sending the UAI message or the first information. This is not specifically limited in this application.

Optionally, there is no necessary logical dependency relationship between whether the network device sends the fifth information and whether the terminal device sends the fourth information. Refer to related descriptions of a sending relationship between the third information and the fourth information. Details are not described herein again.

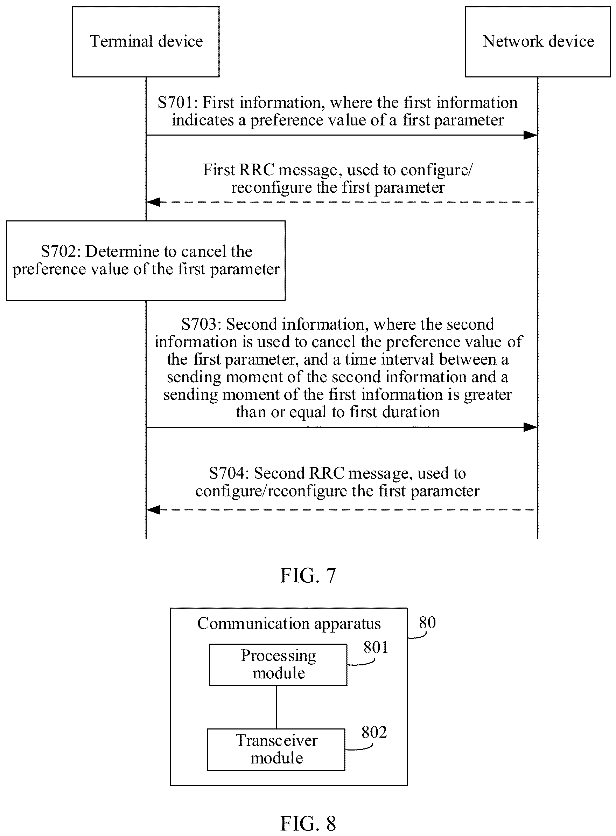

In addition to the method shown in FIG. 4 and the method shown in FIG. 6, this application further provides a communication method. In the method, a terminal device is allowed to cancel a preference after reporting a preference value for a period of time. As shown in FIG. 7, the method includes the following steps.

S701: A terminal device sends first information to a network device. Correspondingly, the network device receives the first information from the terminal device. The first information indicates a preference value of a first parameter.

Optionally, the terminal device may further start a first timer. The first timer is used to prohibit the terminal device from reporting preference information. Before step S701, the network device may configure the terminal device to provide or report the preference value of the first parameter. In addition, the network device may further configure the first timer for the terminal device.

Optionally, after receiving the first information, the network device may send a first RRC message to the terminal device. Correspondingly, the terminal device receives the first RRC message from the network device. The first RRC message is used to configure/reconfigure/modify the first parameter.

For detailed implementation of step S701, refer to related descriptions in step S401. Details are not described herein again.

S702: The terminal device determines to cancel the preference value of the first parameter. For implementation of step S702, refer to related descriptions in step S402. Details are not described herein again.

S703: The terminal device sends second information to the network device. Correspondingly, the network device receives the second information from the terminal device. For implementation of the second information, refer to related descriptions in step S403a. Details are not described herein again.

A time interval between a sending moment of the second information and a sending moment of the first information is greater than or equal to first duration. In other words, after sending the first information, the terminal device sends the second information to the network device at least after the first duration. That is, after reporting a preference value of a parameter, the terminal device needs to send, to the network device at least after the first duration, information used to cancel the preference.

Optionally, the first duration may be less than duration of the first timer. That the terminal device sends the second information to the network device may include: The terminal device sends the second information to the network device during running of the first timer. That is, the sending moment of the second information occurs during the running of the first timer.

Optionally, the first duration may be predefined in a protocol, or may be determined by the terminal device, or may be configured by the network device. This is not specifically limited in this application.

Optionally, after receiving the second information, the network device may further perform the following step S704.

S704: The network device sends a second RRC message to the terminal device. Correspondingly, the terminal device receives the second RRC message from the network device. The second RRC message is used to configure/reconfigure/modify the first parameter. Refer to the related descriptions in step S404. Details are not described herein again.

Optionally, before step S703, the method may further include: The network device sends sixth information to the terminal device. Correspondingly, the terminal device receives the sixth information from the network device. The sixth information indicates at least one of the following: The sixth information indicates the first duration; the sixth information indicates whether the first duration is allowed to be used; the sixth information indicates whether the first duration is available; or the sixth information indicates whether the terminal device is allowed to cancel the preference during the running of the first timer. For implementation of the sixth information, refer to related descriptions of the fifth information. Details are not described herein again.

Optionally, before step S703, the terminal device may further send fourth information to the network device. Correspondingly, the network device receives the fourth information from the terminal device. The fourth information meets at least one of the following:
the fourth information is used to request permission for the terminal device to cancel the preference during the running of the first timer;
the fourth information is used to request permission to cancel the preference after the first duration;
the fourth information indicates that the terminal device has a requirement for canceling the preference;
the fourth information is used to request that cancellation of the preference is not restricted by the first timer;
the fourth information is used to request permission for the terminal device to cancel the preference without being restricted by the first timer;
the fourth information is used to notify the network device that the terminal device may cancel the preference;
the fourth information indicates that the terminal device supports canceling the preference; or
the fourth information indicates that the terminal device supports canceling the preference without being restricted by the first timer (or indicates that the terminal device supports cancellation of the preference not restricted by the first timer).

Optionally, the fourth information and capability information of the terminal device may be carried in a same message, or the fourth information may be carried in the capability information of the terminal device, or the fourth information may be carried in a UAI message. In addition, the fourth information and the first information may be carried in a same message, or the fourth information and the first information may be carried in different messages. This is not specifically limited in this application.

Optionally, there is no necessary logical dependency relationship between whether the network device sends the sixth information and whether the terminal device sends the fourth information. Refer to related descriptions of a sending relationship between the third information and the fourth information. Details are not described herein again.

Based on the solution, after reporting the preference value of the parameter, the terminal device may send, after the first duration, the second information used to cancel the preference value, without being restricted by a prohibit timer. In this way, the network device can configure, in a timely manner based on the second information, a parameter value that matches a current service requirement, thereby improving user experience. In addition, an interval between sending time of the second information and sending time of the first information is at least the first duration, in other words, within the first duration after the first information is sent, the terminal device is not allowed to cancel the preference. Therefore, the terminal device can be prevented from frequently requesting the network device to perform configuration, thereby reducing implementation complexity of the network device.

It may be understood that, in the foregoing embodiments, the method and/or the steps implemented by the network device may alternatively be implemented by a component (for example, a processor, a chip, a chip system, a circuit, a logical module, or software) that can be used in the network device, and the method and/or the steps implemented by the terminal device may alternatively be implemented by a component (for example, a processor, a chip, a chip system, a circuit, a logical module, or software) that can be used in the terminal device. The chip system may include a chip, or the chip system may include a chip and another discrete device.

It may be understood that, to implement the foregoing functions, a communication apparatus includes a hardware structure and/or a software module for performing a corresponding function. A person skilled in the art should be easily aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

FIG. 8 of a communication apparatus is a diagram of a structure of a communication apparatus 80. The communication apparatus 80 includes a processing module 801 and a transceiver module 802. The communication apparatus 80 may be configured to implement a function of the network device or the terminal device.

In some embodiments, the communication apparatus 80 may further include a storage module (not shown in FIG. 8), configured to store program instructions and data.

In some embodiments, the transceiver module 802 may also be referred to as a transceiver unit, configured to implement a sending function and/or a receiving function. The transceiver module 802 may include a transceiver circuit, a transceiver machine, a transceiver, or a communication interface.

In some embodiments, the transceiver module 802 may include a receiving module and a sending module, respectively configured to perform receiving and sending steps performed by the network device or the terminal device in the foregoing method embodiments and/or configured to support another process of the technology described in this specification. The processing module 801 may be configured to perform processing (for example, determining) steps performed by the network device or the terminal device in the foregoing method embodiments and/or configured to support another process of the technology described in this specification.

When the communication apparatus 80 is configured to implement a function of the terminal device, in a possible implementation,
the transceiver module 802 is configured to send first information, where the first information indicates a preference value of a first parameter. The processing module 801 is configured to send second information through the transceiver module 802 if it is determined to cancel the preference value of the first parameter and the terminal device is allowed to cancel a preference during running of a first timer. The first timer is used to prohibit the terminal device from reporting preference information. The second information is used to cancel the preference value of the first parameter.

Optionally, the transceiver module 802 is further configured to receive third information, where the third information indicates that the terminal device is allowed to cancel the preference during the running of the first timer.

Optionally, that the transceiver module 802 is configured to send the second information includes: the transceiver module 802 is configured to send the second information during the running of the first timer.

Optionally, the transceiver module 802 is further configured to send fourth information. The fourth information meets at least one of the following: The fourth information is used to request the third information; the fourth information is used to request permission for the terminal device to cancel the preference during the running of the first timer; the fourth information indicates that the terminal device has a requirement for canceling the preference; the fourth information is used to request that cancellation of the preference is not restricted by the first timer; the fourth information is used to request permission for the terminal device to cancel the preference without being restricted by the first timer; or the fourth information is used to notify the network device that the terminal device may cancel the preference.

Optionally, the processing module 801 is further configured to start or restart the first timer.

Optionally, the processing module 801 is further configured to: if the terminal device is not allowed to cancel the preference during the running of the first timer, control the transceiver module 802 to send the second information when the first timer is not running.

When the communication apparatus 80 is configured to implement a function of the terminal device, in another possible implementation,
the transceiver module 802 is configured to send first information, where the first information indicates a preference value of a first parameter. The transceiver module 802 is further configured to receive third information, where the third information indicates that the terminal device is allowed to cancel a preference during running of a first timer. The transceiver module 802 is further configured to send second information during the running of the first timer. The first timer is used to prohibit the terminal device from reporting preference information. The second information is used to cancel the preference value of the first parameter.

When the communication apparatus 80 is configured to implement a function of the terminal device, in still another possible implementation,
the transceiver module 802 is configured to send first information, and the processing module 801 is configured to start a first timer. The first information indicates a preference value of a first parameter, and the first timer is used to prohibit the terminal device from reporting preference information. The processing module 801 is further configured to start or restart a second timer, where the second timer is used to prohibit the terminal device from canceling a preference. If it is determined to cancel the preference value of the first parameter, and the second timer is not running, the transceiver module 802 is further configured to send second information, where the second information is used to cancel the preference value of the first parameter.

Optionally, the transceiver module 802 is further configured to send fourth information. The fourth information is used to request permission for the terminal device to cancel the preference during running of the first timer; or the fourth information is used to request permission to send the second information when the second timer is not running.

Optionally, the transceiver module 802 is further configured to receive fifth information. The fifth information indicates duration of the second timer; or the fifth information indicates that the second timer is allowed to be used; or the fifth information indicates that the second timer is available; or the fifth information is used to enable the second timer.

Optionally, that the processing module 801 is further configured to start or restart the second timer includes: the processing module 801 is further configured to start or restart the second timer after a first radio resource control RRC message is received, where the first RRC message is used to reconfigure the first parameter. Alternatively, the processing module 801 is further configured to start or restart the second timer if it is determined to send the second information.

When the communication apparatus 80 is configured to implement a function of the terminal device, in still another possible implementation,
the transceiver module 802 is configured to send first information, where the first information indicates a preference value of a first parameter. The processing module 801 is configured to determine to cancel the preference value of the first parameter. The transceiver module 802 is further configured to send second information, where a time interval between a sending moment of the second information and a sending moment of the first information is greater than or equal to first duration, and the second information is used to cancel the preference value of the first parameter.

Optionally, the transceiver module 802 is further configured to receive sixth information, where the sixth information indicates the first duration.

When the communication apparatus 80 is configured to implement a function of the network device, in a possible implementation,
the transceiver module 802 is configured to send third information, where the third information indicates whether the terminal device is allowed to cancel a preference during running of a first timer. The first timer is used to prohibit the terminal device from reporting preference information.

Optionally, the transceiver module 802 is further configured to receive first information, where the first information indicates a preference value of a first parameter; and the transceiver module 802 is further configured to receive second information, where the second information is used to cancel the preference value of the first parameter.

Optionally, that the transceiver module 802 is further configured to receive the second information includes: the transceiver module 802 is further configured to receive the second information during the running of the first timer.

When the communication apparatus 80 is configured to implement a function of the network device, in another possible implementation,
the transceiver module 802 is configured to receive first information, where the first information indicates a preference value of a first parameter. The transceiver module 802 is further configured to receive second information during running of a first timer, where the first timer is used to prohibit the terminal device from reporting preference information. The second information is used to cancel the preference value of the first parameter.

Optionally, the transceiver module 802 is further configured to send third information, where the third information indicates whether the terminal device is allowed to cancel a preference during the running of the first timer.

Optionally, the transceiver module 802 is further configured to receive fourth information. The fourth information meets at least one of the following: The fourth information is used to request the third information; the fourth information is used to request permission for the terminal device to cancel the preference during the running of the first timer; the fourth information indicates that the terminal device has a requirement for canceling the preference; the fourth information is used to request that cancellation of the preference is not restricted by the first timer; the fourth information is used to request permission for the terminal device to cancel the preference without being restricted by the first timer; or the fourth information is used to notify the network device that the terminal device may cancel the preference.

When the communication apparatus 80 is configured to implement a function of the network device, in still another possible implementation,
the transceiver module 802 is configured to send configuration information of a first timer, where the first timer is used to prohibit the terminal device from reporting preference information. The transceiver module 802 is further configured to send fifth information, where the fifth information indicates duration of a second timer, or the fifth information indicates that the second timer is allowed to be used, or the fifth information indicates that the second timer is available, or the fifth information is used to enable the second timer.

Optionally, the transceiver module 802 is further configured to receive first information, where the first information indicates a preference value of a first parameter; and the transceiver module 802 is further configured to receive second information, where the second information is used to cancel the preference value of the first parameter.

Optionally, that the transceiver module 802 is configured to receive the second information includes: the transceiver module 802 is configured to receive the second information when the second timer is not running.

All related content of the steps in the foregoing method embodiments may be cited in function descriptions of the corresponding functional modules. Details are not described herein again.

In this application, the communication apparatus 80 is presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, when the communication apparatus 80 in FIG. 8 is a chip or a chip system, a function/an implementation process of the transceiver module 802 may be implemented by using an input/output interface (or a communication interface) of the chip or the chip system, and a function/an implementation process of the processing module 801 may be implemented by using a processor (or a processing circuit) of the chip or the chip system.

The communication apparatus 80 provided in this embodiment may perform the foregoing method. Therefore, for technical effects that can be achieved by the communication apparatus 80, refer to the foregoing method embodiments. Details are not described herein again.

In a possible product form, the terminal device or the network device in embodiments of this application may be implemented by using one or more field programmable gate arrays (field programmable gate arrays, FPGAs), a programmable logic device (programmable logic device, PLD), a controller, a state machine, a gate logic, a discrete hardware component, any other appropriate circuit, or any combination of circuits that can perform various functions described in this application.

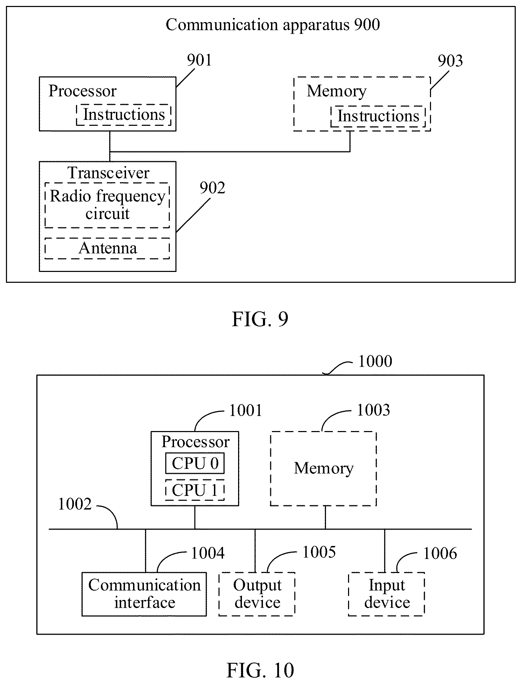

In another possible product form, the terminal device or the network device in embodiments of this application may be implemented by using a general bus architecture. For ease of description, refer to FIG. 9. FIG. 9 is a diagram of a structure of a communication apparatus 900 according to an embodiment of this application. The communication apparatus 900 includes a processor 901 and a transceiver 902. The communication apparatus 900 may be a network device, or a chip or a chip system in the network device. Alternatively, the communication apparatus 900 may be a terminal device, or a chip or a module in the terminal device. FIG. 9 shows only main components in the communication apparatus 900. In addition to the processor 901 and the transceiver 902, the communication apparatus may further include a memory 903 and an input/output apparatus (not shown in the figure).

Optionally, the processor 901 is mainly configured to: process a communication protocol and communication data, control the entire communication apparatus, execute a software program, and process data of the software program. The memory 903 is mainly configured to store the software program and the data. The transceiver 902 may include a radio frequency circuit and an antenna. The radio frequency circuit is mainly configured to perform conversion between a baseband signal and a radio frequency signal and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

Optionally, the processor 901, the transceiver 902, and the memory 903 may be connected through a communication bus.

After the communication apparatus is powered on, the processor 901 may read the software program in the memory 903, interpret and execute instructions of the software program, and process the data of the software program. When data needs to be sent in a wireless manner, the processor 901 performs baseband processing on the to-be-sent data, and outputs a baseband signal to the radio frequency circuit. The radio frequency circuit performs radio frequency processing on the baseband signal, and then sends a radio frequency signal to the outside through the antenna in a form of an electromagnetic wave. When data is sent to the communication apparatus, the radio frequency circuit receives the radio frequency signal through the antenna, converts the radio frequency signal into a baseband signal, and outputs the baseband signal to the processor 901. The processor 901 converts the baseband signal into data and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, in hardware implementation, a person skilled in the art may figure out that the communication apparatus 80 may be in a form of the communication apparatus 900 shown in FIG. 9.

In an example, the functions/implementation processes of the processing module 801 in FIG. 8 may be implemented by the processor 901 in the communication apparatus 900 shown in FIG. 9 by invoking the computer-executable instructions stored in the memory 903. The function/implementation process of the transceiver module 802 in FIG. 8 may be implemented by the transceiver 902 in the communication apparatus 900 shown in FIG. 9.

In still another possible product form, the network device or the terminal device in this application may use a composition structure shown in FIG. 10, or include components shown in FIG. 10. FIG. 10 is a diagram of composition of a communication apparatus 1000 according to this application. The communication apparatus 1000 may be a terminal device, or a chip or a system-on-a-chip in the terminal device, or may be a network device, or a module, a chip, or a system-on-a-chip in the network device.

As shown in FIG. 10, the communication apparatus 1000 includes at least one processor 1001 and at least one communication interface (in FIG. 10, only an example in which one communication interface 1004 and one processor 1001 are included is used for description). Optionally, the communication apparatus 1000 may further include a communication bus 1002 and a memory 1003.

The processor 1001 may be a general-purpose central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. The processor 1001 may alternatively be another apparatus having a processing function, for example, a circuit, a component, or a software module. This is not limited.

The communication bus 1002 is configured to connect different components in the communication apparatus 1000, so that the different components can communicate with each other. The communication bus 1002 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is for representing the bus in FIG. 10, but this does not mean that there is only one bus or only one type of bus.

The communication interface 1004 is configured to communicate with another device or a communication network. For example, the communication interface 1004 may be a module, a circuit, a transceiver, or any apparatus that can implement communication. Optionally, the communication interface 1004 may alternatively be an input/output interface located in the processor 1001, and is configured to implement signal input and signal output of the processor.

The memory 1003 may be an apparatus having a storage function, and is configured to store instructions and/or data. The instructions may be computer programs.

For example, the memory 1003 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital universal optical disc, a Blu-ray optical disc, and the like), a magnetic disk storage medium or another magnetic storage device, or the like. This is not limited.

It should be noted that the memory 1003 may be independent of the processor 1001, or may be integrated with the processor 1001. The memory 1003 may be located inside the communication apparatus 1000, or may be located outside the communication apparatus 1000. This is not limited. The processor 1001 may be configured to execute the instructions stored in the memory 1003, to implement a method provided in the following embodiments of this application.

In an optional implementation, the communication apparatus 1000 may further include an output device 1005 and an input device 1006. The output device 1005 communicates with the processor 1001, and may display information in a plurality of manners. For example, the output device 1005 may be a liquid crystal display (liquid crystal display, LCD), a light-emitting diode (light-emitting diode, LED) display device, a cathode ray tube (cathode ray tube, CRT) display device, or a projector (projector). The input device 1006 communicates with the processor 1001, and may receive user input in a plurality of manners. For example, the input device 1006 may be a mouse, a keyboard, a touchscreen device, or a sensor device.

In some embodiments, in hardware implementation, a person skilled in the art may figure out that the communication apparatus 80 shown in FIG. 8 may be in a form of the communication apparatus 1000 shown in FIG. 10.

In an example, the functions/implementation processes of the processing module 801 in FIG. 8 may be implemented by the processor 1001 in the communication apparatus 1000 shown in FIG. 10 by invoking the computer-executable instructions stored in the memory 1003. The function/implementation process of the transceiver module 802 in FIG. 8 may be implemented by the communication interface 1004 in the communication apparatus 1000 shown in FIG. 10.

It should be noted that the structure shown in FIG. 10 does not constitute a specific limitation on the network device or the terminal device. For example, in some other embodiments of this application, the network device or the terminal device may include more or fewer components than those shown in the figure, a combination of some components, splitting of some components, or different arrangements of the components. The components shown in the figure may be implemented by hardware, software, or a combination of software and hardware.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any foregoing method embodiment. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and transmit the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or the instructions are executed by a computer, functions in any foregoing method embodiment are implemented.

This application further provides a computer program product. When the computer program product is executed by a computer, functions of any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiment. Details are not described herein again.

It may be understood that the system, apparatuses, and methods described in this application may alternatively be implemented in another manner. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may be physically separated or not, this is, may be located together in the same place or distributed on a plurality of network units. Parts displayed as units may be or may be not physical units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, this specification and accompanying drawings are merely example description of this application defined by the accompanying claims, and are considered as any of or all modifications, variations, combinations or equivalents that cover the scope of this application. It is clear that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A communication method, wherein the method comprises:
sending first information, wherein the first information indicates a preference value of a first parameter; and
sending second information if it is determined to cancel the preference value of the first parameter and a terminal device is allowed to cancel a preference during running of a first timer, wherein the first timer is used to prohibit the terminal device from reporting preference information, and the second information is used to cancel the preference value of the first parameter.

2. The method according to claim 1, wherein the method further comprises:
receiving third information, wherein the third information indicates that the terminal device is allowed to cancel the preference during the running of the first timer.

3. The method according to claim 1 or 2, wherein the method further comprises: sending fourth information, wherein
the fourth information is used to request the third information; or the fourth information is used to request permission for the terminal device to cancel the preference during the running of the first timer.

4. The method according to any one of claims 1 to 3, wherein the sending the second information comprises:
sending the second information during the running of the first timer.

5. The method according to any one of claims 1 to 4, wherein the method further comprises: starting or restarting the first timer.

6. The method according to any one of claims 1 to 5, wherein the first information or the second information is carried in a user equipment assistance information UAI message.

7. The method according to any one of claims 1 to 6, wherein the first parameter comprises at least one of the following: a discontinuous reception DRX parameter, a maximum aggregated bandwidth, a maximum quantity of carriers, or a maximum quantity of multiple-input multiple-output layers.

8. The method according to any one of claims 1 to 7, wherein the method further comprises: if the terminal device is not allowed to cancel the preference during the running of the first timer, sending the second information when the first timer is not running.

9. A communication method, wherein the method comprises:
sending first information, wherein the first information indicates a preference value of a first parameter;
starting a first timer, wherein the first timer is used to prohibit a terminal device from reporting preference information;
starting or restarting a second timer, wherein the second timer is used to prohibit the terminal device from canceling a preference; and
sending second information if it is determined to cancel the preference value of the first parameter and the second timer is not running, wherein the second information is used to cancel the preference value of the first parameter.

10. The method according to claim 9, wherein the method further comprises: sending fourth information, wherein the fourth information is used to request permission for the terminal device to cancel the preference during running of the first timer; or the fourth information is used to request permission to send the second information when the second timer is not running.

11. The method according to claim 9 or 10, wherein the method further comprises: receiving fifth information, wherein
the fifth information indicates duration of the second timer; or the fifth information indicates that the second timer is allowed to be used.

12. The method according to any one of claims 9 to 11, wherein the starting or restarting the second timer comprises:
starting or restarting the second timer after a first radio resource control RRC message is received, wherein the first RRC message is used to reconfigure the first parameter; or
starting or restarting the second timer if it is determined to send the second information.

13. The method according to any one of claims 9 to 12, wherein the duration of the second timer is less than duration of the first timer.

14. The method according to any one of claims 9 to 13, wherein the first information or the second information is carried in a user equipment assistance information UAI message.

15. The method according to any one of claims 9 to 14, wherein the first parameter comprises at least one of the following: a discontinuous reception DRX parameter, a maximum aggregated bandwidth, a maximum quantity of carriers, or a maximum quantity of multiple-input multiple-output layers.

16. A communication method, wherein the method comprises:
sending first information, wherein the first information indicates a preference value of a first parameter;
determining to cancel the preference value of the first parameter; and
sending second information, wherein a time interval between a sending moment of the second information and a sending moment of the first information is greater than or equal to first duration, and the second information is used to cancel the preference value of the first parameter.

17. The method according to claim 16, wherein the method further comprises: receiving sixth information, wherein the sixth information indicates the first duration.

18. The method according to claim 16 or 17, wherein the first information or the second information is carried in a user equipment assistance information UAI message.

19. The method according to any one of claims 16 to 18, wherein the first parameter comprises at least one of the following: a discontinuous reception DRX parameter, a maximum aggregated bandwidth, a maximum quantity of carriers, or a maximum quantity of multiple-input multiple-output layers.

20. A communication apparatus, wherein the communication apparatus comprises: a processor, configured to run a computer program or instructions, to cause the communication apparatus to perform the method according to any one of claims 1 to 8, or cause the communication apparatus to perform the method according to any one of claims 9 to 15, or cause the communication apparatus to perform the method according to any one of claims 16 to 19.

21. A computer-readable storage medium, wherein the computer-readable storage medium stores computer instructions or a computer program, and when the computer instructions or the computer program is run on a computer, the method according to any one of claims 1 to 8 is performed, or the method according to any one of claims 9 to 15 is performed, or the method according to any one of claims 16 to 19 is performed.

22. A computer program product, wherein the computer program product comprises computer instructions, and when a part or all of the computer instructions are run on a computer, the method according to any one of claims 1 to 8 is performed, or the method according to any one of claims 9 to 15 is performed, or the method according to any one of claims 16 to 19 is performed.

23. A chip, comprising:
a memory, configured to store computer program instructions; and
a processor, configured to execute the computer program instructions, so that a communication apparatus comprising the chip performs the method according to any one of claims 1 to 19.
